# EUROPÄISCHE PATENTSCHRIFT

(11) **EP 3 389 937 B1**
(45) Veröffentlichungstag und Bekanntmachung des Hinweises auf die Patenterteilung: **14.10.2020**
(21) Anmeldenummer: 16815828.5
(22) Anmeldetag: 16.12.2016
(51) Int. Cl.: B25F 3/00

(54) **WERKZEUGBASISMODUL**
TOOL BASIC MODULE
MODULE DE BASE D'OUTIL

(30) Priorität: 16.12.2015 DE 102015225489; 15.12.2016 DE 102016225114
(43) Veröffentlichungstag der Anmeldung: 24.10.2018
(73) Patentinhaber: Robert Bosch GmbH, 70442 Stuttgart (DE)
(72) Erfinder: JUNKERSDORF, Pascal, 70469 Stuttgart (DE); SZELL, Istvan, 70771 Leinfelden-Echterdingen (DE); HAMPEL, Thomas, 71106 Magstadt (DE); ROJO, Asmir, 72669 Unterensingen (DE); ETZEL, Timo, 73765 Neuhausen A.D.F. (DE); GAIRING, Juergen, 70195 Stuttgart (DE)
(86) Internationale Anmeldenummer: PCT/EP2016/081408
(87) Internationale Veröffentlichungsnummer: WO 2017/103095

(56) Entgegenhaltungen:
- EP-A1- 2 177 322
- EP-A2- 1 075 906
- EP-A2- 2 668 913
- WO-A1-2011/103636
- DE-A1-102014 205 555
- US-A- 3 952 239
- US-A1- 2004 188 119
- US-A1- 2010 288 520
- US-A1- 2012 210 585
- US-A1- 2013 008 677
- US-A1- 2013 118 767

## Beschreibung

### Stand der Technik

Es ist bereits ein Werkzeugbasismodul, insbesondere zu einer eigenständigen Nutzung, mit einer Antriebseinheit, mit einem Hauptausgang und mit einer Koppelvorrichtung, die eine mechanische Schnittstelle zu einer antriebstechnischen mechanischen Anbindung zumindest einer Aufsatzvorrichtung an dem Hauptausgang aufweist, vorgeschlagen worden. Ein Beispiel ist aus der US2013118767A1 bekannt.

### Offenbarung der Erfindung

Die Erfindung geht aus von einem Werkzeugbasismodul, insbesondere zu einer eigenständigen Nutzung, mit einer Antriebseinheit, mit einem Hauptausgang und mit einer Koppelvorrichtung, die eine mechanische Schnittstelle zu einer antriebstechnischen mechanischen Anbindung zumindest einer Aufsatzvorrichtung an dem Hauptausgang aufweist.

Es wird vorgeschlagen, dass die Koppelvorrichtung eine elektrische Schnittstelle zu einer Übertragung einer großen Leistung und/oder eines großen Stroms aufweist, die zu einer mit der mechanischen Anbindung gekoppelten elektrischen Anbindung der zumindest einen Aufsatzvorrichtung an dem Hauptausgang vorgesehen ist.

Dadurch kann ein besonders vielseitig nutzbares Werkzeugbasismodul bereitgestellt werden. Es können Aufsatzvorrichtungen mit elektrischen Zusatzfunktionen genutzt werden. Ressourcen, wie beispielsweise eine Energieversorgung des Werkzeugbasismoduls, können besonders wirtschaftlich eingesetzt werden. Eine zusätzliche Energieversorgung für die Aufsatzvorrichtung kann eingespart werden. Es kann ein hoher Benutzerkomfort erreicht werden. Unter einem "Werkzeugbasismodul" soll in diesem Zusammenhang insbesondere eine Handwerkzeugmaschine verstanden werden. Unter einer "Handwerkzeugmaschine" soll in diesem Zusammenhang insbesondere eine werkstückbearbeitende, handgeführte Maschine, vorteilhaft jedoch eine Akku-Handwerkzeugmaschine, ein Schrauber, insbesondere ein Akku-Schrauber, ein Akku-Bohrschrauber, eine Bohrmaschine, ein Bohr- und/oder Schlaghammer, eine Säge, ein Hobel, eine Fräse, ein Schleifer, ein Winkelschleifer, ein Gartengerät und/oder ein Multifunktionswerkzeug verstanden werden. Eine werkstückbearbeitende, handgeführte Maschine ist dabei eine handgeführte Maschine zur Bearbeitung eines Werkstücks. Unter einer "eigenständigen Nutzung" soll in diesem Zusammenhang insbesondere eine Nutzung unabhängig von der Aufsatzvorrichtung, insbesondere allein, verstanden werden, beispielsweise zum Schrauben, Bohren, Schleifen und/oder Rühren. Insbesondere ist das Werkzeugbasismodul als solches ohne Aufsatzvorrichtung nutzbar. Vorzugsweise ist die Aufsatzvorrichtung in Verbindung mit dem Werkzeugbasismodul zu einer Nutzung vorgesehen, die von einer Nutzung des Werkzeugbasismoduls allein verschieden ist. Unter einem "Hauptausgang" soll in diesem Zusammenhang insbesondere ein Ausgang eines Hauptabtriebsstrangs des Werkzeugbasismoduls verstanden werden, insbesondere zu einer Übertragung eines Drehmoments und/oder einer Drehbewegung. Vorzugsweise wird der Hauptausgang von einer Abtriebswelle, insbesondere von einem freien Ende einer Abtriebswelle, gebildet. Zur Übertragung eines Drehmoments und/oder einer Drehbewegung auf die Aufsatzvorrichtung weist der Hauptausgang insbesondere einen polygonalen Querschnitt auf. Der polygonale Querschnitt dient der drehfesten Verbindung des Hauptausgangs mit der Aufsatzvorrichtung. Der Hauptausgang kann insbesondere eine Abtriebswelle mit einer Werkzeugaufnahme zu einer Aufnahme eines Einsatzwerkzeugs aufweisen. Insbesondere stellt die Antriebseinheit in zumindest einem Betriebszustand ein Drehmoment zu einem Antrieb der Abtriebswelle bereit. Insbesondere ist die Abtriebswelle zu einem Antrieb der Werkzeugaufnahme vorgesehen. Vorzugsweise weist der Hauptausgang eine Hauptabtriebsachse auf, die beispielsweise durch eine Drehachse der Abtriebswelle festgelegt ist. Vorzugsweise ist die Werkzeugaufnahme als eine Steck- und/oder Rastaufnahme ausgebildet. Bevorzugt weist die Werkzeugaufnahme eine Ausnehmung mit einem polygonalen Querschnitt zu einer Aufnahme des Einsatzwerkzeugs auf, wie beispielsweise eines Schraubbits, einer Bürste oder eines Rührers. Vorzugsweise ist die Ausnehmung als ein Innensechskant ausgebildet. Es ist denkbar, dass die Werkzeugaufnahme eine Verriegelungshülse aufweist. Es ist auch denkbar, dass die Werkzeugaufnahme zur Aufnahme und/oder Sicherung eines Einsatzwerkzeugs ohne eine Verriegelungshülse vorgesehen ist. Bei einer "eigenständigen Nutzung" des Werkzeugbasismoduls ist der Hauptausgang als Werkzeugaufnahme zur lösbaren Aufnahme eines Einsatzwerkzeugs ausgebildet und dient der Drehmomentübertragung auf das Einsatzwerkzeug. Dabei ist das Werkzeugbasismodul eigenständig ohne Aufsatzvorrichtung unter Verwendung eines Einsatzwerkzeugs nutzbar. Alternativ zu einer eigenständigen Nutzung kann das Werkzeugbasismodul auch zur Nutzung mit einer Aufsatzvorrichtung vorgesehen sein. Dabei findet eine Drehmomentübertragung von dem Hauptausgang auf die Aufsatzvorrichtung statt. Für die Nutzung des Werkzeugbasismoduls mit der Aufsatzvorrichtung weist das Werkzeugbasismodul eine Koppelvorrichtung mit einer mechanischen Schnittstelle auf.

Das Werkzeugbasismodul umfasst neben der Antriebseinheit und dem Hauptausgang sowie der Koppelvorrichtung insbesondere auch eine Getriebeeinheit. Die Getriebeeinheit ist insbesondere dazu ausgebildet, eine Drehzahl der Antriebseinheit anzupassen, insbesondere zu verringern. Die Getriebeeinheit ist insbesondere als Untersetzungsgetriebeeinheit ausgeführt, mit der die Drehzahl der Antriebseinheit auf eine niedrigere Drehzahl des Hauptausgangs des Werkzeugbasismoduls angepasst wird. Insbesondere stellt die Antriebseinheit in zumindest einem Betriebszustand ein Drehmoment zu einem Antrieb der Abtriebswelle bereit. Vorzugsweise ist die Hauptabtriebsachse zumindest im Wesentlichen parallel zu einer Hauptarbeitsrichtung des Werkzeugbasismoduls ausgerichtet. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8 Grad, vorteilhaft kleiner als 5 Grad und besonders vorteilhaft kleiner als 2 Grad aufweist. Der Ausdruck "zumindest im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel einschließen, der insbesondere weniger als 8 Grad, vorteilhaft weniger als 5 Grad und besonders vorteilhaft weniger als 2 Grad von 90 Grad abweicht. Richtungsangaben wie "axial", "radial" und "in Umfangsrichtung" sollen insbesondere bezogen auf eine Richtung der Hauptabtriebsachse verstanden werden. Unter "axial" soll dabei insbesondere in Richtung der Hauptabtriebsachse verstanden werden. Unter "radial" soll senkrecht zu der Hauptabtriebsachse entlang einer Geraden, welche die Hauptabtriebsachse schneidet, nach außen verstanden werden. Unter "in Umfangsrichtung" soll entlang eines Kreises in einer Ebene senkrecht zu der Hauptabtriebsachse verstanden werden. Unter einer "Koppelvorrichtung" soll in diesem Zusammenhang insbesondere eine Vorrichtung verstanden werden, die dazu vorgesehen ist, ein Gehäuse des Werkzeugbasismoduls lösbar, insbesondere werkzeuglos lösbar, mit einem Gehäuse der Aufsatzvorrichtung zu verbinden. Die Koppelvorrichtung bewirkt eine lösbare, insbesondere werkzeuglos lösbare, elektrische und mechanische Anbindung der Aufsatzvorrichtung an dem Werkzeugbasismodul. Dazu weist die Koppelvorrichtung eine mechanische Schnittstelle auf. Die mechanische Schnittstelle ist dazu ausgebildet, eine antriebstechnische mechanische Anbindung der Aufsatzvorrichtung an dem Hauptausgang zu bewirken. Insbesondere bewirkt die mechanische Schnittstelle eine Drehmomentübertragung von dem Hauptausgang auf die Aufsatzvorrichtung. Die Koppelvorrichtung weist insbesondere ferner eine Verriegelungseinheit auf, mit der das Gehäuse des Werkzeugbasismoduls lösbar mechanisch, insbesondere werkzeuglos lösbar mechanisch mit dem Gehäuse der Aufsatzvorrichtung verbindbar ist. Die Verriegelungseinheit bewirkt insbesondere eine Axialsicherung und/oder eine Drehsicherung des Gehäuses der Aufsatzvorrichtung an dem Gehäuse des Werkzeugbasismoduls. Hierfür weist die Verriegelungseinheit zumindest ein Sicherungselement zur Axialsicherung und/oder zur Drehsicherung auf. Die Verriegelungseinheit kann zum Beispiel ein oder mehrere Sicherungselemente aufweisen, die sowohl eine Axialsicherung als auch eine Drehsicherung bewirken. Die Verriegelungseinheit kann alternativ ein oder mehrere Sicherungselemente aufweisen, die eine Axialsicherung oder eine Drehsicherung bewirken. Bei einer derartigen Verriegelungseinheit ist zumindest ein Sicherungselement für die Axialsicherung und zumindest ein Sicherungselement für die Drehsicherung vorgesehen. Das Sicherungselement für die Axialsicherung und das Sicherungselement für die Drehsicherung sind verschieden voneinander ausgebildet. Das zumindest eine Sicherungselement zur Axialsicherung und/oder Drehsicherung kann insbesondere als ein kraft- und/oder formschlüssiges Sicherungselement ausgebildet sein. Die Verriegelungseinheit weist ferner insbesondere ein Entriegelungselement auf. Das Entriegelungselement ist insbesondere dazu vorgesehen, die Verriegelung der Aufsatzvorrichtung an dem Gehäuse des Werkzeugbasismoduls zu lösen. Das Entriegelungselement ist insbesondere durch den Benutzer von Hand betätigbar. Das Entriegelungselement ist beispielhaft als drehbar gelagerter Entriegelungsring ausgeführt. Das Entriegelungselement ist vorzugsweise an der Aufsatzvorrichtung vorgesehen. Alternativ kann das Entriegelungselement auch an dem Gehäuse des Werkzeugbasismoduls vorhanden sein.

Die Koppelvorrichtung weist ferner zumindest eine elektrische Schnittstelle auf. Die elektrische Schnittstelle ist insbesondere dazu ausgelegt, eine große Leistung und/oder einen großen Strom zu übertragen. Nachfolgend wird die elektrische Schnittstelle auch als Leistungsschnittstelle bezeichnet. Unter einer "großen Leistung" soll in diesem Zusammenhang insbesondere eine Leistung von wenigstens 20 W, vorzugsweise eine Leistung von wenigstens 40 W, bevorzugt eine Leistung von wenigstens 60 W und besonders bevorzugt eine Leistung von wenigstens 80 W verstanden werden. Unter einer mit der mechanischen Anbindung "gekoppelten Anbindung" soll in diesem Zusammenhang insbesondere eine sich zumindest im Wesentlichen gleichzeitig mit der mechanischen Anbindung schließende Anbindung verstanden werden. Vorzugsweise sind die mechanische Anbindung und die elektrische Anbindung dazu vorgesehen, in einer selben Schließbewegung geschlossen zu werden. Vorzugsweise ist die Koppelvorrichtung dazu vorgesehen, die mechanische Anbindung und die elektrische Anbindung der zumindest einen Aufsatzvorrichtung an dem Werkzeugbasismodul zu bewirken. Zum Beispiel kann die Koppelvorrichtung dazu vorgesehen sein, die mechanische und elektrische Anbindung mittels einer zumindest im Wesentlichen geradlinigen Bewegung der zumindest einen Aufsatzvorrichtung relativ zu dem Werkzeugbasismodul herzustellen. Insbesondere weist das Werkzeugbasismodul eine Energieversorgung auf, die in zumindest einem Betriebszustand Strom zu einer Versorgung der elektrischen Schnittstelle bereitstellt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In vorteilhafter Weise ist die elektrische Schnittstelle zu einer Übertragung eines Stroms von wenigstens 2 A vorgesehen. Dadurch kann ein Werkzeugbasismodul zu einer Kopplung mit einer besonders leistungsstarken Aufsatzvorrichtung bereitgestellt werden. Es kann ein Werkzeugbasismodul zu einer Kopplung mit einer Aufsatzvorrichtung mit einem hohen Leistungsbedarf bereitgestellt werden. Vorzugsweise ist die elektrische Schnittstelle zu einer Übertragung eines Stroms von wenigstens 4 A, bevorzugt von wenigstens 10 A, besonders bevorzugt von wenigstens 20 A und ganz besonders bevorzugt von wenigstens 25 A vorgesehen. Insbesondere ist die elektrische Schnittstelle zu einer Übertragung eines Stroms zwischen dem Werkzeugbasismodul und der zumindest einen Aufsatzvorrichtung vorgesehen. Vorzugsweise ist die elektrische Schnittstelle zu einer Übertragung eines Stroms zu einer Energieversorgung einer elektrischen Energienutzungseinheit der zumindest einen Aufsatzvorrichtung vorgesehen. Vorzugsweise ist die elektrische Schnittstelle zu einer Übertragung einer Leistung vorgesehen, die wenigstens 50 Prozent, bevorzugt wenigstens 70 Prozent, besonders bevorzugt wenigstens 90 Prozent und ganz besonders bevorzugt wenigstens 100 Prozent einer maximalen Leistungsaufnahme der Antriebseinheit entspricht.

Ferner wird vorgeschlagen, dass die elektrische Schnittstelle in einem gekoppelten Zustand einen elektrischen Widerstand von höchstens 15 mΩ aufweist. Dadurch kann eine besonders verlustarme Anbindung erreicht werden. Es kann ein Werkzeugbasismodul zu einer besonders effizienten Kopplung mit einer Aufsatzvorrichtung bereitgestellt werden. Unter einem "elektrischen Widerstand" der elektrischen Schnittstelle soll in diesem Zusammenhang insbesondere ein Kontaktwiderstand verstanden werden. Vorzugsweise weist die elektrische Schnittstelle in einem angebundenen Zustand einen Widerstand von höchstens 10 mΩ, bevorzugt von höchstens 5 mΩ und besonders bevorzugt von höchstens 3 mΩ auf.

Die elektrische Schnittstelle für die Übertragung einer großen Leistung und/oder eines großen Stroms weist wenigstens ein, insbesondere zumindest zwei gleichartige, Kontaktelemente zur elektrischen Kontaktierung der Aufsatzvorrichtung mit dem Werkzeugbasismodul auf. Das wenigstens eine Kontaktelement ist insbesondere als elektrisches Steckelement ausgeführt. Das elektrische Steckelement kann insbesondere als Tulpenstecker ausgeführt sein.

In einer vorteilhaften Ausgestaltung weist die elektrische Schnittstelle zumindest zwei Steckelemente und zumindest ein Isolatorelement auf, das zumindest in einem angebundenen Zustand räumlich zwischen den Steckelementen angeordnet ist. Dadurch kann ein Kurzschluss besonders wirksam vermieden werden. Es kann eine besonders sicheres und/oder zuverlässiges Werkzeugbasismodul bereitgestellt werden. Unter einem "Steckelement" soll in diesem Zusammenhang insbesondere ein Element zu einer Ausbildung einer elektrischen Steckverbindung verstanden werden, insbesondere eine Aufnahme, eine Aufnahmeöffnung, ein Klemm- und/oder Federelement oder ein Stift. Unter einem "Isolatorelement" soll in diesem Zusammenhang ein Bauteil aus einem elektrischen Nichtleiter, insbesondere aus einem festen Material, verstanden werden. Vorzugsweise weist die elektrische Schnittstelle zwei mittels des Isolatorelements getrennte Aufnahmeöffnungen auf, die dazu vorgesehen sind, jeweils ein korrespondierendes Steckelement der Aufnahmevorrichtung aufzunehmen.

Ferner wird vorgeschlagen, dass die elektrische Schnittstelle zumindest zwei artgleiche Kontaktschnittstellen aufweist. Dadurch kann ein besonders flexibel koppelbares Werkzeugbasismodul bereitgestellt werden. Es kann ein besonders hoher Benutzerkomfort erreicht werden. Insbesondere sind die Kontaktschnittstellen redundant zueinander ausgebildet. Vorzugsweise sind die Kontaktschnittstellen bezogen auf die Hauptabtriebsachse des Hauptausgangs in einer Umfangsrichtung zueinander versetzt angeordnet. Vorzugsweise ist die elektrische Schnittstelle dazu vorgesehen, die Aufsatzvorrichtung bezogen auf die Hauptabtriebsachse des Hauptausgangs in einer von zumindest zwei unterschiedlichen Winkelpositionen elektrisch anzubinden. Bevorzugt ist die elektrische Schnittstelle dazu vorgesehen, die Aufsatzvorrichtung bezogen auf die Hauptabtriebsachse des Hauptausgangs in einer von zumindest drei unterschiedlichen Winkelpositionen, die vorzugsweise in Umfangsrichtung gleichverteilt angeordnet sind, elektrisch anzubinden. Besonders bevorzugt ist die elektrische Schnittstelle dazu vorgesehen, die Aufsatzvorrichtung bezogen auf die Hauptabtriebsachse des Hauptausgangs in einer von zumindest acht unterschiedlichen Winkelpositionen, die vorzugsweise in Umfangsrichtung gleichverteilt angeordnet sind, elektrisch anzubinden. Vorzugsweise weisen die Kontaktschnittstellen jeweils zumindest zwei verschiedenpolige Kontaktelemente auf.

In einer vorteilhaften Ausgestaltung weist die Koppelvorrichtung zumindest eine weitere elektrische Schnittstelle zu einer Übertragung eines kleinen Stroms und/oder einer kleinen Leistung auf, die dazu vorgesehen ist, in einem gekoppelten Zustand zumindest einen von der elektrischen Schnittstelle unabhängigen Stromkreis zu schließen. Dadurch kann ein Einsatzbereich des Werkzeugbasismoduls weiter vergrößert werden. Unter einer "weiteren elektrischen Schnittstelle" soll in diesem Zusammenhang insbesondere eine Schnittstelle verstanden werden, die dazu vorgesehen ist, in einem gekoppelten Zustand zumindest einen Stromkreis zu schließen, der von der elektrischen Schnittstelle unabhängig ist. Unter einer "kleinen Leistung" soll in diesem Zusammenhang insbesondere eine Leistung von höchstens 4 W, vorzugsweise eine Leistung von höchstens 2 W, bevorzugt eine Leistung von höchstens 1 W und besonders bevorzugt eine Leistung von höchstens 0,1 W verstanden werden. Unter einem "kleinen Strom" soll in diesem Zusammenhang insbesondere ein Strom von höchstens 1000 mA, vorzugsweise von höchstens 500 mA, bevorzugt von höchstens 100 mA und besonders bevorzugt von höchstens 25 mA verstanden werden. Vorzugsweise ist die zumindest eine weitere elektrische Schnittstelle zu einer Übertragung eines Signals, insbesondere eines Signals zu einer Identifizierung eines Aufsatztyps der zumindest einen Aufsatzvorrichtung, vorgesehen. Vorzugsweise ist die zumindest eine weitere elektrische Schnittstelle zu einer mit der mechanischen Anbindung gekoppelten elektrischen Anbindung der zumindest einen Aufsatzvorrichtung an dem Hauptausgang vorgesehen.

Die weitere elektrische Schnittstelle für die Übertragung einer kleinen Leistung und/oder eines kleinen Stroms weist insbesondere zumindest ein Kontaktelement zur elektrischen Kontaktierung der Aufsatzvorrichtung mit dem Werkzeugbasismodul auf. Das Kontaktelement weist eine Kontaktfläche auf. Die elektrische Schnittstelle weist ferner eine Koppelrichtung auf. Die Kontaktfläche des Kontaktelements kann zumindest im Wesentlichen parallel zu der Koppelrichtung angeordnet sein. Ergänzend oder alternativ kann die Kontaktfläche des Kontaktelements zumindest im Wesentlichen senkrecht zu der Koppelrichtung angeordnet sein.

In vorteilhafter Weise umfasst das Werkzeugbasismodul zumindest eine Steuer- und/oder Regeleinheit, die zu einer Auswertung zumindest eines, insbesondere mittels der zumindest einen weiteren elektrischen Schnittstelle übermittelten, Werts einer Kenngröße der zumindest einen Aufsatzvorrichtung vorgesehen ist. Dadurch können Steuer- und/oder Regelgrößen spezifisch für die zumindest eine Aufsatzvorrichtung eingestellt werden. Ein Einsatz der zumindest einen Aufsatzvorrichtung kann optimiert werden. Es kann eine hohe Betriebssicherheit erreicht werden. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorzugsweise bestimmt die Steuer- und/oder Regeleinheit in einem Prüf- und/oder Testschritt, insbesondere mittels der zumindest einen weiteren elektrischen Schnittstelle, einen Wert der Kenngröße und vergleicht den Wert zu einer Auswertung mit zumindest einem Referenzwert. Vorzugsweise ist die Steuer- und/oder Regeleinheit dazu vorgesehen, einen Typ, eine Art oder eine Variante der Aufsatzvorrichtung, insbesondere mittels einer Zuordnung des Werts der Kenngröße zu einem Referenzwert, zu bestimmen und/oder einen für die elektrische Schnittstelle bereitgestellten Strom und/oder einen für die zumindest eine weitere elektrische Schnittstelle bereitgestellten Strom in Abhängigkeit von einem Typ, einer Art oder einer Variante der Aufsatzvorrichtung, insbesondere zumindest im Wesentlichen automatisch oder halbautomatisch, zu steuern und/oder zu regeln. Vorzugsweise ist die Steuer- und/oder Regeleinheit dazu vorgesehen, die Antriebseinheit des Werkzeugbasismoduls in Abhängigkeit von einem Typ, einer Art oder einer Variante des Aufsatzvorrichtungstyps, zu aktivieren und/oder zu deaktivieren.

Ferner wird vorgeschlagen, dass die Kenngröße als ein Kodierwiderstand ausgebildet ist. Dadurch kann konstruktiv einfach ein Kennwert der Aufsatzvorrichtung bereitgestellt werden. Unter einem "Kodierwiderstand" soll in diesem Zusammenhang insbesondere ein wiederholt messbarer Widerstandswert in einem mittels der zumindest einen weiteren elektrischen Schnittstelle anbindbaren Strompfad verstanden werden. Vorzugsweise sind Werte des Kodierwiderstands jeweils einem Typ einer Aufsatzvorrichtung zugeordnet. Vorzugsweise ist die Steuer- und/oder Regeleinheit dazu vorgesehen, in einem Prüf- und/oder Testschritt, insbesondere mittels eines Prüfstroms, einen Wert des Kodierwiderstands zu bestimmen.

In vorteilhafter Weise steuert und/oder regelt die Steuer- und/oder Regeleinheit in zumindest einem Betriebszustand eine Stromversorgung der Antriebseinheit, eine Stromversorgung der elektrischen Schnittstelle und/oder eine Stromversorgung der weiteren elektrischen Schnittstelle in Abhängigkeit von dem Wert der Kenngröße. Aufgrund dessen kann das Werkzeugbasismodul mit der Aufsatzvorrichtung besonders sicher und zuverlässig betrieben werden. Es kann ein besonders effizienter und/oder besonders ressourcensparender Betrieb des Werkzeugbasismoduls mit der Aufsatzvorrichtung erreicht werden. Ein Benutzerkomfort kann weiter gesteigert werden. Vorzugsweise ist die Steuer- und/oder Regeleinheit dazu vorgesehen, eine Stromversorgung der Antriebseinheit, eine Stromversorgung der elektrischen Schnittstelle und/oder eine Stromversorgung der weiteren elektrischen Schnittstelle zumindest im Wesentlichen automatisch oder halbautomatisch, zu steuern und/oder zu regeln.

Ferner wird vorgeschlagen, dass die elektrische Schnittstelle zumindest ein Kontaktelement aufweist, das zu einer Reinigungsbewegung zu einer Reinigung einer Kontaktfläche, insbesondere zu einer Schleifbewegung, vorgesehen ist. Dadurch können Schmutzteilchen und/oder ein Belag, wie beispielsweise eine Oxidschicht, entfernt werden. Es kann ein, insbesondere dauerhaft, geringer Widerstand der elektrischen Schnittstelle erreicht werden. Es kann eine besonders kompakte elektrische Schnittstelle mit einem besonders geringen Widerstand bereitgestellt werden. Unter einer "Reinigungsbewegung" soll in diesem Zusammenhang insbesondere eine Bewegung, insbesondere eine Bewegung zweier Kontaktelemente relativ zueinander, verstanden werden zu einer Entfernung von Teilchen, die aufgrund von Verschmutzung, Ablagerung und/oder aufgrund von Korrosion und/oder Alterung an der Kontaktfläche angeordnet sind. Vorzugsweise wirkt bei der Schleifbewegung eine Anlagekraft und/oder eine Presskraft, vorzugsweise zumindest im Wesentlichen senkrecht zu den Kontaktflächen, auf die Kontaktfläche. Insbesondere kann zumindest eine der Kontaktflächen eine Oxidschicht aufweisen, die durch die Reibbewegung zumindest im Wesentlichen entfernt wird. Vorzugsweise weist die elektrische Schnittstelle einen Reinigungsweg für die Reinigungsbewegung von wenigstens 2 mm, bevorzugt von wenigstens 4 mm und besonders bevorzugt von wenigstens 8 mm auf. Vorzugsweise weist die elektrische Schnittstelle zumindest eine Tulpensteckeraufnahme auf.

Ferner wird vorgeschlagen, dass die elektrische Schnittstelle zumindest ein Kontaktelement aufweist, das in einem angebundenen Zustand eine Kontaktfläche mit einer Presskraft von wenigstens 4 N beaufschlagt. Dadurch kann ein besonders guter, insbesondere widerstandsarmer und/oder zuverlässiger, elektrischer Kontakt erreicht werden. Es kann ein Werkzeugbasismodul mit einer besonders robusten elektrischen Schnittstelle bereitgestellt werden. Vorzugsweise ist die Kontaktfläche in zumindest einem Betriebszustand in einen Stromkreis eingebunden. Vorzugsweise ist die Presskraft zumindest im Wesentlichen senkrecht zu der Kontaktfläche ausgerichtet. Vorzugsweise beaufschlagt das zumindest eine Kontaktelement die Kontaktfläche mit einer Presskraft von wenigstens 5 N, bevorzugt mit einer Presskraft von wenigstens 5,5 N und besonders bevorzugt mit einer Presskraft von wenigstens 6 N.

Die Erfindung bezieht sich ferner auf eine Aufsatzvorrichtung, insbesondere zu einer Nutzung mit einem Werkzeugbasismodul. Die Aufsatzvorrichtung umfasst einen Arbeitsausgang, einen Haupteingang und eine Koppelvorrichtung, die eine mechanische Schnittstelle zu einer antriebstechnischen mechanischen Anbindung des Haupteingangs der Aufsatzvorrichtung an einem Hauptausgang eines Werkzeugbasismoduls aufweist. Der Arbeitsausgang der Aufsatzvorrichtung kann zum Beispiel als Werkzeugaufnahme ausgebildet sein. Die Koppelvorrichtung der Aufsatzvorrichtung weist ferner eine elektrische Schnittstelle zu einer Übertragung einer großen Leistungen und/oder eines großen Stroms auf, die zu einer mit der mechanischen Anbindung gekoppelten elektrischen Anbindung der Aufsatzvorrichtung an dem Hauptausgang eines Werkzeugbasismoduls vorgesehen ist.

Die Koppelvorrichtung der Aufsatzvorrichtung ist zu der Koppelvorrichtung des Werkzeugbasismoduls derart korrespondierend ausgebildet, dass die Koppelvorrichtung der Aufsatzvorrichtung eine lösbare, insbesondere werkzeuglos lösbare, elektrische und mechanische Anbindung der Aufsatzvorrichtung an dem Werkzeugbasismodul bewirkt. Die Koppelvorrichtung der Aufsatzvorrichtung ist dazu vorgesehen sein, die mechanische und elektrische Anbindung der Aufsatzvorrichtung an der Koppelvorrichtung des Werkzeugbasismoduls zu bewirken. Dazu weist die Koppelvorrichtung eine mechanische Schnittstelle auf. Die mechanische Schnittstelle ist dazu ausgebildet, eine antriebstechnische mechanische Anbindung der Aufsatzvorrichtung an dem Hauptausgang des Werkzeugbasismoduls zu bewirken. Insbesondere bewirkt die mechanische Schnittstelle eine Drehmomentübertragung von dem Hauptausgang des Werkzeugbasismoduls auf den Haupteingang der Aufsatzvorrichtung. Die mechanische Schnittstelle der Aufsatzvorrichtung ist damit korrespondierend zur mechanischen Schnittstelle des Werkzeugbasismoduls ausgebildet. Die Koppelvorrichtung weist insbesondere ferner eine Verriegelungseinheit auf, mit der das Gehäuse des Werkzeugbasismoduls lösbar mechanisch, insbesondere werkzeuglos lösbar mechanisch mit dem Gehäuse der Aufsatzvorrichtung verbindbar ist. Die Verriegelungseinheit ist zu der Verriegelungseinheit des Werkzeugbasismoduls korrespondierend ausgebildet. Die Verriegelungseinheit bewirkt insbesondere eine Axialsicherung und/oder eine Drehsicherung des Gehäuses der Aufsatzvorrichtung an dem Gehäuse des Werkzeugbasismoduls. Hierfür weist die Verriegelungseinheit der Aufsatzvorrichtung zumindest ein Sicherungselement zur Axialsicherung und/oder zur Drehsicherung auf. Die Verriegelungseinheit kann zum Beispiel ein oder mehrere Sicherungselemente aufweisen, die sowohl eine Axialsicherung als auch eine Drehsicherung bewirken. Die Verriegelungseinheit kann alternativ ein oder mehrere Sicherungselemente aufweisen, die eine Axialsicherung oder eine Drehsicherung bewirken. Bei einer derartigen Verriegelungseinheit ist zumindest ein Sicherungselement für die Axialsicherung und zumindest ein Sicherungselement für die Drehsicherung vorgesehen. Das Sicherungselement für die Axialsicherung und das Sicherungselement für die Drehsicherung sind verschieden voneinander ausgebildet. Das zumindest eine Sicherungselement zur Axialsicherung und/oder Drehsicherung kann insbesondere als ein kraft- und/oder formschlüssiges Sicherungselement ausgebildet sein. Die Verriegelungseinheit weist ferner insbesondere ein Entriegelungselement auf. Das Entriegelungselement ist insbesondere dazu vorgesehen, die Verriegelung der Aufsatzvorrichtung an dem Gehäuse des Werkzeugbasismoduls zu lösen. Das Entriegelungselement ist insbesondere durch den Benutzer von Hand betätigbar. Das Entriegelungselement ist beispielhaft als drehbar gelagerter Entriegelungsring ausgeführt. Vorzugsweise ist das Entriegelungselement an der Aufsatzvorrichtung vorgesehen.

Die Koppelvorrichtung weist ferner zumindest eine elektrische Schnittstelle auf. Die elektrische Schnittstelle ist insbesondere dazu ausgelegt, eine große Leistung und/oder einen großen Strom zu übertragen. Nachfolgend wird die elektrische Schnittstelle auch als Leistungsschnittstelle bezeichnet. Die elektrische Schnittstelle der Aufsatzvorrichtung ist korrespondierend zu der elektrischen Schnittstelle des Werkzeugbasismoduls ausgebildet, um eine elektrische Anbindung der Aufsatzvorrichtung an dem Werkzeugbasismodul zu bewirken. Die elektrische Schnittstelle für die Übertragung einer großen Leistung und/oder eines großen Stroms weist wenigstens ein, insbesondere zumindest zwei gleichartige, Kontaktelemente zur elektrischen Kontaktierung der Aufsatzvorrichtung mit dem Werkzeugbasismodul auf. Das wenigstens eine Kontaktelement ist insbesondere als elektrisches Steckelement ausgeführt. Das elektrische Steckelement der Aufsatzvorrichtung ist insbesondere korrespondierend zu dem elektrischen Steckelement des Werkzeugbasismoduls ausgebildet. Das elektrische Steckelement der Leistungsschnittstelle des Werkzeugbasismoduls kann insbesondere als Tulpenstecker ausgeführt sein. Das elektrische Steckelement der Leistungsschnittstelle der Aufsatzvorrichtung ist hierzu korrespondierend in Form eines Stiftes oder einer Klinge ausgeführt, die in den Tulpenstecker des Werkzeugbasismoduls zur elektrischen Anbindung der Aufsatzvorrichtung eingesteckt werden kann.

Die Koppelvorrichtung weist in einer weitergehenden Ausgestaltung ferner zumindest eine weitere elektrische Schnittstelle auf. Die weitere elektrische Schnittstelle ist insbesondere dazu ausgelegt, eine kleine Leistung und/oder einen kleinen Strom zu übertragen. Die weitere elektrische Schnittstelle der Aufsatzvorrichtung ist korrespondierend zu der elektrischen Schnittstelle des Werkzeugbasismoduls ausgebildet, um eine elektrische Anbindung der Aufsatzvorrichtung an dem Werkzeugbasismodul zu bewirken. Die elektrische Schnittstelle für die Übertragung einer kleinen Leistung und/oder eines kleinen Stroms weist insbesondere zumindest ein Kontaktelement zur elektrischen Kontaktierung der Aufsatzvorrichtung mit dem Werkzeugbasismodul auf. Das Kontaktelement weist eine Kontaktfläche auf. Die elektrische Schnittstelle weist ferner eine Koppelrichtung auf. Die Kontaktfläche des Kontaktelements kann zumindest im Wesentlichen parallel zu der Koppelrichtung angeordnet sein. Ergänzend oder alternativ kann die Kontaktfläche des Kontaktelements zumindest im Wesentlichen senkrecht zu der Koppelrichtung angeordnet sein.

Ferner wird ein Handwerkzeugmaschinensystem mit einem, insbesondere eigenständig nutzbaren, erfindungsgemäßen Werkzeugbasismodul mit zumindest einer Aufsatzvorrichtung, die zu einer antriebstechnischen mechanischen und/oder einer elektrischen Anbindung an das Werkzeugbasismodul vorgesehen ist, vorgeschlagen. Dadurch kann ein Handwerkzeugmaschinensystem mit einem besonders großen Einsatzbereich bereitgestellt werden. Ein Einsatzbereich kann in vorteilhafter Weise durch Aufsatzvorrichtungen, insbesondere durch Aufsatzvorrichtungen mit einer eigenständigen Energienutzungseinheit, erweitert werden. Vorzugsweise umfasst das Handwerkzeugmaschinensystem zumindest eine weitere Aufsatzvorrichtung, bevorzugt wenigstens drei Aufsatzvorrichtungen.

Ferner wird vorgeschlagen, dass die zumindest eine Aufsatzvorrichtung zu einer elektrischen Anbindung mittels der elektrischen Schnittstelle und zumindest einer weiteren elektrischen Schnittstelle vorgesehen ist. Dadurch kann ein Einsatzbereich des Handwerkzeugmaschinensystems weiter vergrößert werden. Eine Signalübertragung kann in vorteilhafter Weise von einer Leistungsübertragung getrennt werden. Es kann eine besonders zuverlässige Signalübertragung erreicht werden. Vorzugsweise ist die elektrische Schnittstelle zu einer Leistungsübertragung vorgesehen. Vorzugsweise ist die zumindest eine weitere elektrische Schnittstelle zu einer Signalübertragung vorgesehen. Es ist denkbar, dass die zumindest eine Aufsatzvorrichtung jeweils lediglich zu einer antriebstechnischen mechanischen Anbindung oder lediglich zu einer Anbindung mittels zumindest einer der elektrischen Schnittstellen vorgesehen ist.

In einer vorteilhaften Ausgestaltung weist die Aufsatzvorrichtung zumindest eine elektrische Energienutzungseinheit auf mit einer maximalen Leistungsaufnahme, die wenigstens 50 Prozent einer maximalen Leistungsaufnahme der Antriebseinheit des Werkzeugbasismoduls entspricht. Dadurch können Aufsatzvorrichtungen für eine besonders große Zahl von Einsatzzwecken bereitgestellt werden. Unter einer elektrischen "Energienutzungseinheit" soll in diesem Zusammenhang insbesondere eine elektrische Antriebseinheit, insbesondere ein Elektromotor, eine Beleuchtungseinheit, eine Heizeinheit, eine Kühleinheit, eine Sensoreinheit, eine Wiedergabeeinheit, eine Kommunikationseinheit, eine Steuer- und/oder Regeleinheit, eine Geräuscherzeugungseinheit, eine Verstärkereinheit, eine Schwingungserzeugungseinheit oder eine Kombination solcher Einheiten oder eine andere dem Fachmann sinnvoll erscheinende Einheit zu einer Nutzung elektrischer Energie verstanden werden. Vorzugsweise entspricht die maximale Leistungsaufnahme der elektrischen Energienutzungseinheit der Aufsatzvorrichtung wenigstens 70 Prozent, bevorzugt wenigstens 90 Prozent und besonders bevorzugt wenigstens 100 Prozent der maximalen Leistungsaufnahme der Antriebseinheit des Werkzeugbasismoduls.

Ferner wird eine Aufsatzvorrichtung eines solchen Handwerkzeugmaschinensystems vorgeschlagen. Dadurch kann eine Aufsatzvorrichtung mit einem großen Einsatzbereich, insbesondere mit einer elektrischen Zusatzfunktion, bereitgestellt werden. Es kann eine besonders komfortabel benutzbare Aufsatzvorrichtung bereitgestellt werden. Unter einer "Aufsatzvorrichtung" soll in diesem Zusammenhang eine Vorrichtung zu einer antriebstechnischen mechanischen und/oder einer elektrischen Kopplung mit dem Werkzeugbasismodul verstanden werden. Insbesondere weist die Aufsatzvorrichtung eine Gegenschnittstelle auf, die zu einer Anbindung an die elektrische Schnittstelle vorgesehen ist. Bevorzugt weist die Aufsatzvorrichtung zumindest eine weitere Gegenschnittstelle zu einer Anbindung an die zumindest eine weitere elektrische Schnittstelle auf. Vorzugsweise weist die Aufsatzvorrichtung eine, insbesondere mittels der elektrischen Schnittstelle auslesbare, Kenngröße, wie beispielsweise einen Kodierwiderstand, auf.

Ferner wird ein Verfahren vorgeschlagen zu einer Anbindung einer Aufsatzvorrichtung an ein Werkzeugbasismodul, insbesondere an ein erfindungsgemäßes Werkzeugbasismodul, das eine Antriebseinheit, einen Hauptausgang sowie eine Koppelvorrichtung umfasst, die eine mechanische Schnittstelle zu einer antriebstechnischen mechanischen Anbindung der Aufsatzvorrichtung an dem Hauptausgang aufweist, wobei bei dem Verfahren eine elektrische Schnittstelle der Koppelvorrichtung eine elektrische Anbindung der Aufsatzvorrichtung mit der mechanischen Anbindung koppelt. Dadurch kann eine Aufsatzvorrichtung, insbesondere eine Aufsatzvorrichtung mit einer eigenständigen elektrischen Energienutzungseinheit, besonders komfortabel mit einem Werkzeugbasismodul gekoppelt werden.

Das erfindungsgemäße Werkzeugbasismodul, das Handwerkzeugmaschinensystem, die Aufsatzvorrichtung und/oder das erfindungsgemäße Verfahren sollen/soll hierbei nicht auf die oben beschriebene Anwendung und Ausführungsform beschränkt sein. Insbesondere können/kann das erfindungsgemäße Werkzeugbasismodul und/oder das erfindungsgemäße Verfahren zu einer Erfüllung einer hierin beschriebenen Funktionsweise eine von einer hierin genannten Anzahl von einzelnen Elementen, Bauteilen und Einheiten sowie von Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In den Zeichnungen sind acht Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Ansicht eines Handwerkzeugmaschinensystems mit einem erfindungsgemäßen Werkzeugbasismodul,
- Fig. 2: eine Ansicht einer als Winkelaufsatz ausgebildeten Aufsatzvorrichtung,
- Fig. 3: eine Ansicht eines Hauptausgangs des Werkzeugbasismoduls,
- Fig. 4: eine Ansicht eines Kontaktelements des Werkzeugbasismoduls,
- Fig. 5: eine schematische Seitenansicht eines Kontaktelements der Aufsatzvorrichtung,
- Fig. 6: eine perspektivische Ansicht des Handwerkzeugmaschinensystems mit einer als Säge ausgebildeten Aufsatzvorrichtung,
- Fig. 7: eine teilgeschnittene Ansicht der als Säge ausgebildeten Aufsatzvorrichtung,
- Fig. 8: eine Detailansicht eines Koppelbereichs der Aufsatzvorrichtung,
- Fig. 9: eine Detailansicht einer als Leistungsschnittstelle ausgebildeten elektrischen Schnittstelle,
- Fig.10: eine schematische Seitenansicht des Handwerkzeugmaschinensystems mit einer als Heißklebeaufsatz ausgebildeten Aufsatzvorrichtung,
- Fig. 11: eine schematische, teilgeschnittene Ansicht des Handwerkzeugmaschinensystems,
- Fig. 12: eine Ansicht eines Hauptausgangs eines Werkzeugbasismoduls mit einer Mehrzahl von Kontaktschnittstellen einer als Leistungsschnittstelle ausgebildeten elektrischen Schnittstelle,
- Fig. 13: eine Ansicht eines Hauptausgangs eines Werkzeugbasismoduls mit elektrischen Schnittstellen, die in einer Verriegelungseinheit integriert sind,
- Fig. 14: eine Schnittansicht des Werkzeugbasismoduls,
- Fig. 15: eine perspektivische Ansicht eines Entriegelungsrings einer zu dem Werkzeugbasismodul komplementären Aufsatzvorrichtung,
- Fig. 16: eine Ansicht eines Hauptausgangs eines Werkzeugbasismoduls mit Kontaktelementen in einem Sockelabschnitt einer Verriegelungseinheit,
- Fig. 17: eine Schnittansicht des Werkzeugbasismoduls,
- Fig. 18: eine perspektivische Ansicht eines Entriegelungsrings einer einer zu dem Werkzeugbasismodul komplementären Aufsatzvorrichtung,
- Fig. 19: eine Ansicht eines Hauptausgangs eines Werkzeugbasismoduls mit Kontaktelementen an Zähnen einer Verriegelungseinheit,
- Fig. 20: eine Ansicht einer Aufnahme einer einer zu dem Werkzeugbasismodul komplementären Aufsatzvorrichtung,
- Fig. 21: eine Ansicht eines Hauptausgangs eines Werkzeugbasismoduls mit Kontaktelementen zwischen Zähnen einer Verriegelungseinheit,
- Fig. 22: eine Ansicht einer Aufnahme einer einer zu dem Werkzeugbasismodul komplementären Aufsatzvorrichtung,
- Fig. 23: eine Ansicht eines Hauptausgangs eines Werkzeugbasismoduls mit Kontaktelementen stirnseitig zwischen Zähnen einer Verriegelungseinheit,
- Fig. 24: eine Ansicht einer Aufnahme einer einer zu dem Werkzeugbasismodul komplementären Aufsatzvorrichtung,
- Fig. 25: eine Ansicht eines Hauptausgangs eines Werkzeugbasismoduls mit ringförmigen Kontaktelementen und
- Fig. 26: eine Ansicht einer Aufnahme einer einer zu dem Werkzeugbasismodul komplementären Aufsatzvorrichtung
- Fig. 27: ein Steckelement der als Leistungsschnittstelle ausgebildeten elektrischen Schnittstelle nach Fig. 9.

### Beschreibung der Ausführungsbeispiele

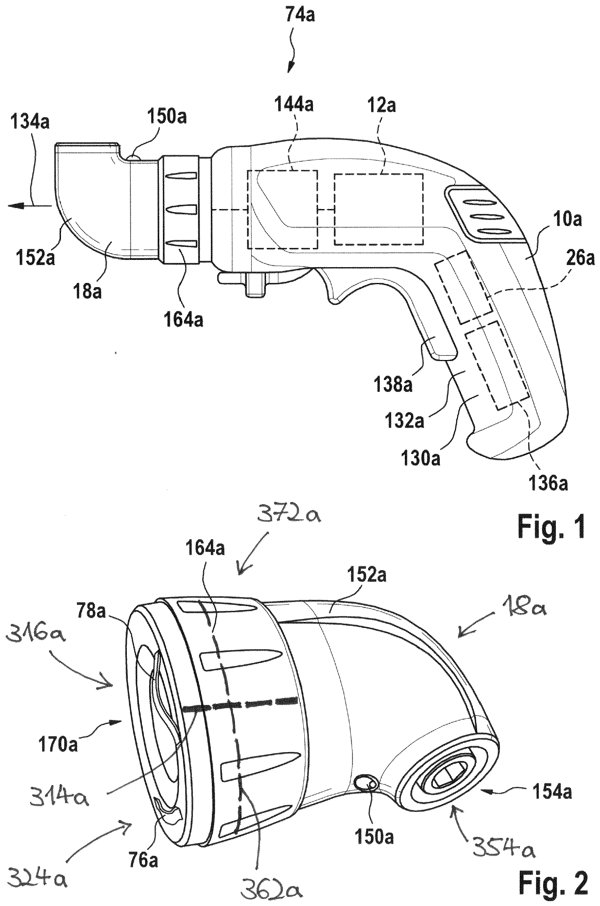

Figur 1 zeigt ein Handwerkzeugmaschinensystem 74a mit einem, insbesondere eigenständig nutzbaren, Werkzeugbasismodul 10a und mit zumindest einer Aufsatzvorrichtung 18a, die zu einer antriebstechnischen mechanischen und/oder einer elektrischen Anbindung an das Werkzeugbasismodul 10a vorgesehen ist.

Das Handwerkzeugmaschinensystem 74a umfasst ein Werkzeugbasismodul 10a zu einer insbesondere eigenständigen Nutzung. Das Werkzeugbasismodul 10a weist eine Antriebseinheit 12a auf. Die Antriebseinheit 12a ist als ein Elektromotor ausgebildet. Das Werkzeugbasismodul 10a ist in dem vorliegenden Ausführungsbeispiel als ein Schrauber ausgebildet. Das Werkzeugbasismodul 10a ist in dem vorliegenden Ausführungsbeispiel als ein Akkuschrauber ausgebildet. Das Werkzeugbasismodul 10a weist ein Gehäuse 130a auf, das in einem montierten Zustand die Antriebseinheit 12a lagert und vor Umwelteinflüssen wie Staub, Feuchtigkeit, Strahlung und/oder Stößen schützt. Das Werkzeugbasismodul 10a weist eine Hauptarbeitsrichtung 134a auf. Das Gehäuse 130a des Werkzeugbasismoduls 10a ist in dem vorliegenden Ausführungsbeispiel pistolenförmig ausgebildet. Das Gehäuse 130a weist an einem entgegen der Hauptarbeitsrichtung 134a orientierten Ende einen Handgriff 132a auf. Der Handgriff 132a ist dazu vorgesehen zu einem Einsatz des Werkzeugbasismoduls 10a und/oder zu einem Einsatz des Handwerkzeugmaschinensystems 74a vom Benutzer mit einer Hand umfasst zu werden. Das Werkzeugbasismodul 10a weist eine Masse von weniger als 500 g auf. Das Werkzeugbasismodul 10a weist eine Masse von zumindest im Wesentlichen 300 g auf.

Das Werkzeugbasismodul 10a weist eine Energieversorgung 136a auf. In dem vorliegenden Ausführungsbeispiel umfasst die Energieversorgung 136a einen elektrischen Energiespeicher. Der elektrische Energiespeicher ist in dem vorliegenden Ausführungsbeispiel als ein wiederaufladbarer Akkumulator ausgebildet. Der elektrische Energiespeicher ist in dem vorliegenden Ausführungsbeispiel als ein Lithium-Ionen-Akkumulator ausgebildet. Das Handwerkzeugmaschinensystem 74a umfasst eine nicht näher dargestellte mit einem Stromnetz verbindbare Ladeeinheit, die zum Laden des elektrischen Energiespeichers vorgesehen ist. Alternativ kann die Energieversorgung 136a dazu vorgesehen sein, die Antriebseinheit 12a direkt mit einem Stromnetz zu verbinden. Es ist auch denkbar, dass die Energieversorgung 136a eine Aufnahme von Einweg-Batterien als Energiespeicher aufweist.

Das Werkzeugbasismodul 10a umfasst einen Hauptschalter 138a, der dazu vorgesehen ist die Antriebseinheit 12a einzuschalten, auszuschalten und/oder eine Drehzahl und/oder ein Drehmoment der Antriebseinheit 12a einzustellen. Das Werkzeugbasismodul 10a umfasst ferner einen Drehrichtungsschalter 140a, der dazu vorgesehen ist, eine Drehrichtung der Antriebseinheit 12a einzustellen.

Das Werkzeugbasismodul 10a weist ferner einen Hauptausgang 14a auf. Das Werkzeugbasismodul 10a umfasst eine Koppelvorrichtung, die eine mechanische Schnittstelle 16a zu einer antriebstechnischen mechanischen Anbindung der zumindest einen Aufsatzvorrichtung 18a an dem Hauptausgang 14a aufweist. Die Aufsatzvorrichtung 18a weist eine zu der mechanischen Schnittstelle 16a korrespondierende mechanische Schnittstelle 316a (vgl. Fig. 2) auf. Der Hauptausgang 14a weist eine Abtriebswelle 142a auf. Die Abtriebswelle 142a tritt an einem in der Hauptarbeitsrichtung 134a des Werkzeugbasismoduls 10a orientierten Ende des Gehäuses 130a aus dem Gehäuse 130a aus. Die Abtriebswelle 142a tritt an einem von dem Handgriff 132a abgewandten Ende des Gehäuses 130a aus dem Gehäuse 130a aus. Der Hauptausgang 14a weist eine Hauptabtriebsachse 68a auf, die einer Drehachse der Abtriebswelle 142a entspricht. Der Hauptausgang 14a weist eine Werkzeugaufnahme 70a auf, die zu einer Aufnahme eines Einsatzwerkzeugs, wie beispielsweise eines Schraubbits, einer Bürste oder eines Rührers vorgesehen ist. Die Werkzeugaufnahme 70a ist in dem vorliegenden Ausführungsbeispiel als eine Steckaufnahme ausgebildet und weist eine Ausnehmung 148a mit einem polygonalen Querschnitt auf. Die Werkzeugaufnahme 70a ist in dem vorliegenden Ausführungsbeispiel als eine Sechskantaufnahme ausgebildet. Die mechanische Schnittstelle 16a umfasst die Werkzeugaufnahme 70a.

Das Werkzeugbasismodul 10a ist unabhängig von der Aufsatzvorrichtung 18a als eine Handwerkzeugmaschine nutzbar. Das Werkzeugbasismodul 10a ist als solches ohne Aufsatzvorrichtung 18a nutzbar. Die Antriebseinheit 12a treibt in zumindest einem Betriebszustand die Werkzeugaufnahme 70a an. In dem vorliegenden Ausführungsbeispiel weist das Werkzeugbasismodul 10a eine Getriebeeinheit 144a auf, die dazu vorgesehen ist, ein Drehmoment und/oder eine Drehbewegung der Antriebseinheit 12a in ein Drehmoment und/oder eine Drehbewegung der Abtriebswelle 142a zu übersetzen. In dem vorliegenden Ausführungsbeispiel weist die Getriebeeinheit 144a ein fest eingestelltes Übersetzungsverhältnis aus. Es ist denkbar, dass die Getriebeeinheit 144a schaltbar ausgebildet ist. Die Antriebseinheit 12a stellt in zumindest einem Betriebszustand ein Drehmoment an dem Hauptausgang 14a bereit. Das Werkzeugbasismodul 10a ist dazu vorgesehen, für eine Nutzung von Hand gehalten zu werden. Das Werkzeugbasismodul 10a weist einen Handgriff 132a auf. Der Handgriff 132a ist einstückig mit dem Gehäuse 130a des Werkzeugbasismoduls 10a ausgebildet.

Die Koppelvorrichtung weist eine elektrische Schnittstelle 90a zu einer Übertragung einer großen Leistung und/oder eines großen Stroms auf, die zu einer mit der mechanischen Anbindung gekoppelten elektrischen Anbindung der zumindest einen Aufsatzvorrichtung 18a an dem Hauptausgang 14a vorgesehen ist. In dem vorliegenden Ausführungsbeispiel weist das Handwerkzeugmaschinensystem 74a Aufsatzvorrichtungen 18a, 20a, 22a auf. Eine erste der Aufsatzvorrichtungen 18a ist als ein Winkelaufsatz ausgebildet. Eine weitere der Aufsatzvorrichtungen 20a ist als ein Sägeaufsatz ausgebildet. Eine dritte der Aufsatzvorrichtungen 22a ist als ein Heißklebeaufsatz ausgebildet. Es ist denkbar, dass das Handwerkzeugmaschinensystem 74a weitere Aufsatzvorrichtungen weiterer Typen umfasst, beispielsweise als Leuchten oder als Bohraufsatz ausgebildete Aufsatzvorrichtungen.

Die elektrische Schnittstelle 90a ist als eine Leistungsschnittstelle ausgebildet und dazu vorgesehen, eine elektrische Leistung von dem Werkzeugbasismodul 10a auf die als Sägeaufsatz ausgebildete Aufsatzvorrichtung 20a oder auf die als Heißklebeaufsatz ausgebildete Aufsatzvorrichtung 22a zu übertragen. Die elektrische Schnittstelle 90a ist dazu vorgesehen, einen Strom von wenigstens 20 A zu übertragen. Die elektrische Schnittstelle 90a ist dazu vorgesehen, eine Leistung von wenigstens 100 Watt zu übertragen. Es ist denkbar, dass die Schnittstelle 90a zu einer Übertragung eines größeren Stroms und/oder einer höheren Leistung vorgesehen ist, von beispielsweise 30 A und/oder 500 Watt. Die als Leistungsschnittstelle ausgebildete elektrische Schnittstelle 90a weist in einem gekoppelten Zustand einen elektrischen Widerstand von höchstens 15 mOhm auf. Die als Leistungsschnittstelle ausgebildete elektrische Schnittstelle 90a weist in einem gekoppelten Zustand einen elektrischen Widerstand von 12 mOhm auf.

Die Koppelvorrichtung weist eine weitere elektrische Schnittstelle 24a zu einer Übertragung einer kleinen Leistung und/oder eines kleinen Stroms auf, die zu einer mit der mechanischen Anbindung gekoppelten weiteren elektrischen Anbindung der Aufsatzvorrichtungen 18a, 20a, 22a an dem Hauptausgang 14a vorgesehen ist. Die elektrische Schnittstelle 24a ist dazu vorgesehen, eine elektrische Leistung und/oder ein elektrisches Signal zwischen dem Werkzeugbasismodul 10a und den Aufsatzvorrichtungen 18a, 20a, 22a zu übertragen. Die elektrische Schnittstelle 24a ist dazu vorgesehen, einen Strom von höchstens 25 mA zu übertragen. Es ist denkbar, dass die Schnittstelle 24a dazu vorgesehen ist, einen Strom von bis zu 1 A zu übertragen. Es ist denkbar, dass die Koppelvorrichtung in einer alternativen Ausgestaltung lediglich die weitere elektrische Schnittstelle 24a zu einer Übertragung einer kleinen Leistung und/oder eines kleinen Stroms aufweist, d.h. dass die als Leistungsschnittstelle ausgebildete Schnittstelle 90a entfällt. Die weitere elektrische Schnittstelle 24a zu einer Übertragung eines kleinen Stroms und/oder einer kleinen Leistung ist dazu vorgesehen, in einem gekoppelten Zustand zumindest einen, von der als Leistungsschnittstelle ausgebildeten elektrischen Schnittstelle 90a unabhängigen, Stromkreis zu schließen.

Die als Winkelaufsatz ausgebildete Aufsatzvorrichtung 18a ist zu einer antriebstechnischen mechanischen und einer elektrischen Anbindung an das Werkzeugbasismodul 10a vorgesehen. Die Aufsatzvorrichtung 18a weist einen schematisch dargestellten Haupteingang 314a auf. Der Haupteingang 314a ist zur Übertragung eines Drehmoments von dem Hauptausgang 14a auf die Aufsatzvorrichtung 18a vorgesehen. Der Haupteingang 314a der Aufsatzvorrichtung 18a kann als eine nicht näher dargestellte Antriebswelle ausgebildet sein. In der dargestellten Ausführungsform ist der Haupteingang 314a zu einer drehfesten Verbindung mit der Werkzeugaufnahme 70a des Werkzeugbasismoduls 10a vorgesehen. Die Antriebswelle weist einen nicht dargestellten Koppelbereich auf, der dazu vorgesehen ist, zu einer antriebstechnischen Kopplung der Aufsatzvorrichtung 18a an das Werkzeugbasismodul 10a in die Ausnehmung 148a der Werkzeugaufnahme 70a einzugreifen. Die als Winkelaufsatz ausgebildete Aufsatzvorrichtung 18a weist in dem vorliegenden Ausführungsbeispiel eine Leuchte 150a auf. Die Aufsatzvorrichtung 18a weist ein Winkelgetriebe auf. Die Aufsatzvorrichtung 18a weist ein Gehäuse 152a auf, das in einem montierten Zustand das Winkelgetriebe und die Antriebswelle lagert. Die Aufsatzvorrichtung 18a weist einen Arbeitsausgang 354a in Form einer Werkzeugaufnahme 154a auf, die zur Aufnahme eines Einsatzwerkzeugs, wie beispielsweise eines Schraubbits, einer Bürste oder eines Rührers vorgesehen ist. Die Werkzeugaufnahme 154a weist eine Drehachse auf, die in einem gekoppelten Zustand mit der Hauptabtriebsachse 68a einen Winkel von zumindest im Wesentlichen 90 Grad einschließt. Das Werkzeugbasismodul 10a ist zu einer Kopplung mit unterschiedlichen Typen von Aufsatzvorrichtungen 18a vorgesehen, beispielsweise mit einem Aufsatz zu einer Drehmomentbegrenzung, mit einem Korkenzieheraufsatz, mit einem Exzenteraufsatz, mit einem Bohraufsatz oder mit einem anderen dem Fachmann geeignet erscheinenden Aufsatz. Die Koppelvorrichtung weist eine Anlagefläche für die Aufsatzvorrichtungen 18a, 20a, 22a auf. Die Anlagefläche ist ringförmig ausgebildet. Die Aufsatzvorrichtungen 18a, 20a, 22a weisen jeweils eine elektrische Schnittstelle 324a als Gegenschnittstelle auf, die korrespondierend zu der weiteren elektrischen Schnittstelle 24a des Werkzeugbasismoduls 10a ausgebildet ist. In einem Betriebszustand versorgt die Energieversorgung 136a des Werkzeugbasismoduls 10a die Leuchte 150a der Aufsatzvorrichtung 18a über die weitere elektrische Schnittstelle 24a und über die elektrische Schnittstelle 324a als Gegenschnittstelle mit elektrischer Energie.

Das Werkzeugbasismodul 10a umfasst zumindest eine Steuer- und/oder Regeleinheit 26a, die zu einer Auswertung zumindest eines, insbesondere mittels der weiteren elektrischen Schnittstelle 24a übermittelten, Werts einer Kenngröße der zumindest einen Aufsatzvorrichtung 18a vorgesehen ist. Die Kenngröße ist als ein Kodierwiderstand ausgebildet. Die Kenngröße kennzeichnet eindeutig einen Typ der Aufsatzvorrichtung 18a. Die Aufsatzvorrichtung 18a weist einen für den Typ spezifischen Wert für die Kenngröße auf. Die Steuer- und/oder Regeleinheit 26a beaufschlagt in einem gekoppelten Zustand die weitere elektrische Schnittstelle 24a mit einem Prüfstrom und bestimmt den Wert der Kenngröße. Die Steuer- und/oder Regeleinheit 26a ermittelt aus dem Wert der Kenngröße einen Typ der gekoppelten Aufsatzvorrichtung 18a.

Die Steuer- und/oder Regeleinheit 26a steuert und/oder regelt in zumindest einem Betriebszustand eine Stromversorgung der Antriebseinheit 12a, eine Stromversorgung der elektrischen Schnittstelle 90a und/oder eine Stromversorgung der weiteren elektrischen Schnittstelle 24a in Abhängigkeit von dem Wert der Kenngröße. Die Steuer- und/oder Regeleinheit 26a legt beispielsweise in Abhängigkeit von dem Typ der gekoppelten Aufsatzvorrichtung 18a Steuer- und/oder Regelgrößen fest, wie beispielsweise Grenzwerte einer der Antriebseinheit 12a zugeführten Leistung, Grenzwerte einer Leistung, eines Drehmoments und/oder einer Drehzahl, welche über die Abtriebswelle 142a übertragen werden. Es ist denkbar, dass die Steuer- und/oder Regeleinheit 26a die Antriebseinheit 12a in Abhängigkeit von einem Typ der gekoppelten Aufsatzvorrichtung 18a abschaltet und/oder deaktiviert. Es ist auch denkbar, dass die Steuer- und/oder Regeleinheit 26a die Antriebseinheit 12a in Abhängigkeit von einem Typ der gekoppelten Aufsatzvorrichtung 18a zu einem Leerlaufbetrieb ansteuert. Die Steuer- und/oder Regeleinheit 26a legt in Abhängigkeit von dem Typ der gekoppelten Aufsatzvorrichtung 18a Steuer- und/oder Regelgrößen für die als Leistungsschnittstelle ausgebildete elektrische Schnittstelle 90a fest, wie beispielsweise Grenzwerte einer Leistung, eines Stroms und/oder einer Spannung. Es ist denkbar, dass das Werkzeugbasismodul 10a eine von einem Benutzer bedienbare Umschalteinheit aufweist, die dazu vorgesehen ist, eine Stromversorgung der Antriebseinheit 12a, eine Stromversorgung der elektrischen Schnittstelle 90a und/oder eine Stromversorgung der weiteren elektrischen Schnittstelle 24a ein- und/oder auszuschalten. Es ist auch denkbar, dass die Umschalteinheit ein Betätigungselement aufweist, das bei einem Koppelvorgang einer der Aufsatzvorrichtungen 18a, 20a, 22a an das Werkzeugbasismodul 10a betätigt wird.

Die elektrischen Schnittstellen 24a, 90a weisen eine gemeinsame Koppelrichtung 40a auf. Die mechanische Schnittstelle 16a und die elektrischen Schnittstellen 24a, 90a weisen eine gemeinsame Koppelrichtung 40a auf. Bei einem Koppelvorgang werden das Werkzeugbasismodul 10a und die Aufsatzvorrichtung 18a zumindest im Wesentlichen in Richtung der Koppelrichtung 40a relativ zueinander bewegt. Die weitere elektrische Schnittstelle 24a weist zumindest eine Kontaktfläche 28a, 30a, 32a, 34a auf, die zumindest im Wesentlichen in einer Kontaktebene angeordnet ist, die zumindest im Wesentlichen senkrecht zu der Koppelrichtung 40a angeordnet ist. Die Kontaktfläche 28a, 30a, 32a, 34a ist zumindest im Wesentlichen eben ausgebildet. Die zumindest eine Kontaktfläche 28a, 30a, 32a, 34a weist eine Flächennormale auf, die zumindest im Wesentlichen parallel zu der Koppelrichtung 40a angeordnet ist. Die weitere elektrische Schnittstelle 24a des Werkzeugbasismoduls 10a weist eine Mehrzahl von Kontaktflächen 28a, 30a, 32a, 34a auf. In dem vorliegenden Ausführungsbeispiel weist die elektrische Schnittstelle 24a des Werkzeugbasismoduls 10a sechzehn Kontaktflächen 28a, 30a, 32a, 34a auf. Der Übersichtlichkeit halber sind nur vier Kontaktflächen 28a, 30a, 32a, 34a der sechzehn Kontaktflächen 28a, 30a, 32a, 34a mit einem Bezugszeichen versehen. Die Kontaktflächen 28a, 30a, 32a, 34a der weiteren elektrischen Schnittstelle 24a sind sämtlich zumindest im Wesentlichen eben ausgebildet und in der Kontaktebene angeordnet.

Die Koppelvorrichtung weist zumindest ein zumindest teilweise scheibenförmiges Trägerelement 42a mit einer Stirnfläche auf, an der die zumindest eine Kontaktfläche 28a, 30a, 32a, 34a angeordnet ist. An der Stirnfläche sind sämtliche Kontaktflächen 28a, 30a, 32a, 34a der weiteren elektrischen Schnittstelle 24a angeordnet. Die Stirnfläche und die Kontaktflächen 28a, 30a, 32a, 34a bilden zumindest im Wesentlichen eine durchgängige Fläche aus. Die Stirnfläche und die Kontaktflächen 28a, 30a, 32a, 34a sind zumindest im Wesentlichen koplanar angeordnet. Das Trägerelement 42a ist in dem vorliegenden Ausführungsbeispiel aus Kunststoff ausgebildet. Das Trägerelement 42a ist in einem montierten Zustand unbeweglich fest mit dem Gehäuse 152a des Werkzeugbasismoduls 10a verbunden. Das Trägerelement 42a ist in dem vorliegenden Ausführungsbeispiel einstückig mit einem Gehäuseteil ausgebildet. Die Stirnfläche des Trägerelements 42a ist im Wesentlichen kreisringförmig ausgebildet. Es weist eine Scheibenebene auf, welche die Richtung der Kontaktebene der weiteren elektrischen Schnittstelle 24a festlegt. Die Stirnfläche des Trägerelements 42a, an der die Kontaktflächen 28a, 30a, 32a, 34a der weiteren elektrische Schnittstelle 24a angeordnet sind, weist die Anlagefläche der Koppelvorrichtung für die Aufsatzvorrichtung 18a auf.

Das scheibenförmige Trägerelement 42a weist einen Außenumfang auf, von dem beabstandet die zumindest eine Kontaktfläche 28a, 30a, 32a, 34a angeordnet ist. Der Außenumfang des Trägerelements 42a entspricht einem Umfang eines Außenkreises des kreisringförmig ausgebildeten Trägerelements 42a. Die Kontaktflächen 28a, 30a, 32a, 34a der elektrischen Schnittstelle 24a sind sämtlich beabstandet von dem Außenumfang des Trägerelements 42a angeordnet. Die Kontaktflächen 28a, 30a, 32a, 34a sind in radialer Richtung innerhalb des Außenumfangs des Trägerelements 42a angeordnet.

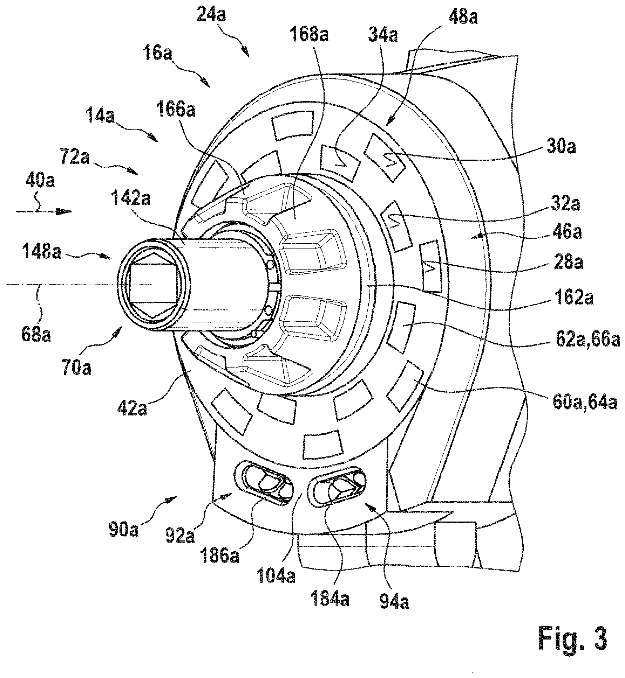

Die weitere elektrische Schnittstelle 24a weist zumindest zwei artgleiche Kontaktschnittstellen 46a, 48a auf. Die weitere elektrische Schnittstelle 24a weist in dem vorliegenden Ausführungsbeispiel acht artgleiche Kontaktschnittstellen 46a, 48a auf. In Figur 3 sind der Übersichtlichkeit halber nur zwei der Kontaktschnittstellen 46a, 48a mit Bezugszeichen versehen. Jede der Kontaktschnittstellen 46a, 48a umfasst zwei Kontaktflächen 28a, 30a, 32a, 34a, die in zumindest einem Betriebszustand eine unterschiedliche elektrische Polung aufweisen. Die Kontaktschnittstellen 46a, 48a sind redundant zueinander ausgebildet. Die Kontaktschnittstellen 46a, 48a sind funktional gleichwertig zueinander ausgebildet. Die Kontaktflächen 28a, 30a, 32a, 34a zweier unterschiedlicher Kontaktschnittstellen 46a, 48a sind in Umfangsrichtung versetzt zueinander angeordnet. Die Kontaktflächen 28a, 30a, 32a, 34a zweier in Umfangsrichtung benachbart angeordneter Kontaktschnittstellen 46a, 48a weisen jeweils einen Zwischenwinkel von jeweils zumindest im Wesentlichen 45 Grad auf. Die Positionen der Kontaktflächen 28a, 30a, 32a, 34a zweier Kontaktschnittstellen 46a, 48a gehen durch eine Drehung um die Hauptabtriebsachse 68a des Werkzeugbasismoduls 10a ineinander über. Die Kontaktschnittstellen 46a, 48a sind dazu vorgesehen, die Aufsatzvorrichtung 18a in acht unterschiedlichen Winkelpositionen, bezogen auf die Hauptabtriebsachse 68a des Werkzeugbasismoduls 10a, elektrisch an das Werkzeugbasismodul 10a anzubinden.

Die weitere elektrische Schnittstelle 24a weist zumindest einen Kontaktflächenkranz 60a auf. Der Kontaktflächenkranz 60a umfasst in dem vorliegenden Ausführungsbeispiel acht der Kontaktflächen 28a, 30a der weiteren elektrischen Schnittstelle 24a. Den acht Kontaktflächen 28a, 30a des Kontaktflächenkranzes 60a sind jeweils acht verschiedene Kontaktschnittstellen 46a, 48a der weiteren elektrischen Schnittstelle 24a zugeordnet. Die Kontaktflächen 28a, 30a des Kontaktflächenkranzes 60a weisen zumindest im Wesentlichen einen gleichen Abstand von der Abtriebswelle 142a des Werkzeugbasismoduls 10a auf. Die Kontaktflächen 28a, 30a des Kontaktflächenkranzes 60a sind ringförmig angeordnet. Die Kontaktflächen 28a, 30a des Kontaktflächenkranzes 60a sind in Umfangsrichtung gleichmäßig verteilt angeordnet. In Umfangsrichtung benachbarte Kontaktflächen 28a, 30a sind jeweils um einen Winkel von 45 Grad zueinander versetzt. Die Kontaktflächen 28a, 30a sind in Form von Kreisringabschnitten ausgebildet, die konzentrisch zu dem Kontaktflächenkranz 60a angeordnet sind. Eine Haupterstreckungsrichtung der Kontaktflächen 28a, 30a ist zumindest im Wesentlichen parallel zu einer Umfangsrichtung angeordnet.

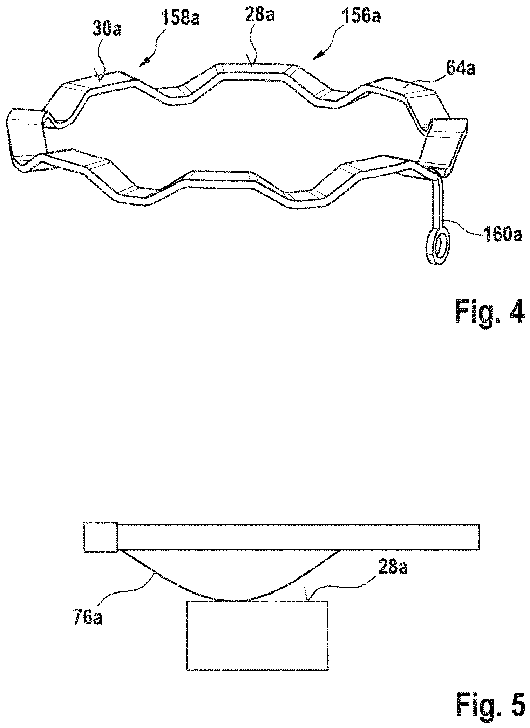

Der Kontaktflächenkranz 60a ist von einem einzigen Kontaktelement 64a ausgebildet (vgl. Figur 4). Es ist auch denkbar, dass der Kontaktflächenkranz 60a von einer Mehrzahl von Kontaktelementen ausgebildet ist. Die Kontaktflächen 28a, 30a des Kontaktflächenkranzes 60a weisen in zumindest einem aktiven Betriebszustand der elektrischen Schnittstelle 24a ein gleiches elektrisches Potential auf. Das Kontaktelement 64a ist zumindest im Wesentlichen kreisringförmig ausgebildet. Das Kontaktelement 64a weist in axialer Richtung acht Erhebungen 156a, 158a auf. In Figur 4 sind der Übersichtlichkeit halber nur zwei der Erhebungen 156a, 158a mit Bezugszeichen versehen. Die Oberflächen der Erhebungen 156a, 158a bilden die Kontaktflächen 28a, 30a des Kontaktflächenkranzes 60a aus. Die Erhebungen 156a, 158a weisen bezogen auf eine Grundebene des Kontaktflächenkranzes 60a eine zumindest im Wesentlichen gleiche Höhe auf. Die Erhebungen 156a, 158a sind in Umfangsrichtung gleichmäßig verteilt angeordnet. In Umfangsrichtung benachbarte Erhebungen 156a, 158a sind um einen Winkel von 45 Grad zueinander versetzt. Das Kontaktelement 64a weist eine Kontaktfahne 160a auf. Die Kontaktfahne 160a ist zu einem Anschluss des Kontaktelements 64a vorgesehen.

Die weitere elektrische Schnittstelle 24a weist zumindest einen weiteren Kontaktflächenkranz 62a auf, der zumindest im Wesentlichen konzentrisch zu dem Kontaktflächenkranz 60a angeordnet ist. Der weitere Kontaktflächenkranz 62a umfasst in dem vorliegenden Ausführungsbeispiel acht weitere der Kontaktflächen 32a, 34a der weiteren elektrischen Schnittstelle 24a. Die acht weiteren Kontaktflächen 32a, 34a des weiteren Kontaktflächenkranzes 62a sind jeweils acht verschiedenen Kontaktschnittstellen 46a, 48a der weiteren elektrischen Schnittstelle 24a zugeordnet. Je eine Kontaktfläche 32a, 34a des weiteren Kontaktflächenkranzes 62a ist je einer Kontaktfläche 28a, 30a des Kontaktflächenkranzes 60a zugeordnet. Je eine Kontaktfläche 32a, 34a des weiteren Kontaktflächenkranzes 62a und je eine Kontaktfläche 28a, 30a des Kontaktflächenkranzes 60a sind einer gemeinsamen Kontaktschnittstelle 46a, 48a zugeordnet. Die Kontaktflächen 28a, 30a des Kontaktflächenkranzes 60a und die Kontaktflächen 32a, 34a des weiteren Kontaktflächenkranzes 62a sind in Umfangsrichtung zumindest im Wesentlichen alternierend angeordnet. Je eine Kontaktfläche 32a, 34a des weiteren Kontaktflächenkranzes 62a ist zumindest im Wesentlichen in einer Lücke zwischen zwei benachbarten Kontaktflächen 28a, 30a des Kontaktflächenkranzes 60a angeordnet.

Die Kontaktflächen 32a, 34a des weiteren Kontaktflächenkranzes 62a weisen zumindest im Wesentlichen einen gleichen Abstand von der Abtriebswelle 142a des Werkzeugbasismoduls 10a auf. Die Kontaktflächen 32a, 34a des weiteren Kontaktflächenkranzes 62a sind ringförmig angeordnet. Die Kontaktflächen 32a, 34a des weiteren Kontaktflächenkranzes 62a sind in Umfangsrichtung gleichmäßig verteilt angeordnet. In Umfangsrichtung benachbarte Kontaktflächen 32a, 34a sind jeweils um einen Winkel von 45 Grad zueinander versetzt. Die Kontaktflächen 32a, 34a sind in Form von Kreisringabschnitten ausgebildet, die konzentrisch zu dem weiteren Kontaktflächenkranz 62a angeordnet sind. Eine Haupterstreckungsrichtung der Kontaktflächen 32a, 34a ist zumindest im Wesentlichen parallel zu einer Umfangsrichtung angeordnet.

Der weitere Kontaktflächenkranz 62a und der Kontaktflächenkranz 60a weisen unterschiedliche Radien auf. Der weitere Kontaktflächenkranz 62a weist einen kleineren Radius auf als der Kontaktflächenkranz 60a. Die Kontaktflächen 28a, 30a des Kontaktflächenkranzes 60a sind radial beabstandet von den Kontaktflächen 32a, 34a des weiteren Kontaktflächenkranzes 62a angeordnet. Die Kontaktflächen 28a, 30a des Kontaktflächenkranzes 60a weisen einen Abstand von dem Außenumfang des Trägerelements 42a von zumindest im Wesentlichen 0,5 mm auf. Die Kontaktflächen 32a, 34a des weiteren Kontaktflächenkranzes 62a weisen einen Abstand von dem Außenumfang des Trägerelements 42a von zumindest im Wesentlichen 2,5 mm auf.

Der weitere Kontaktflächenkranz 62a ist von einem einzigen weiteren Kontaktelement 66a ausgebildet. Es ist auch denkbar, dass der weitere Kontaktflächenkranz 62a von einer Mehrzahl von Kontaktelementen ausgebildet ist. Die Kontaktflächen 32a, 34a des weiteren Kontaktflächenkranzes 62a weisen in zumindest einem aktiven Betriebszustand der elektrischen Schnittstelle 24a ein gleiches elektrisches Potential auf. Das weitere Kontaktelement 66a ist abgesehen von einem Radius analog zu dem Kontaktelement 66a ausgebildet. Das weitere Kontaktelement 66a ist zumindest im Wesentlichen kreisringförmig ausgebildet. Das weitere Kontaktelement 66a weist in axialer Richtung acht Erhebungen auf. Die Oberflächen der Erhebungen bilden die Kontaktflächen 32a, 34a des weiteren Kontaktflächenkranzes 62a aus. Die Erhebungen weisen bezogen auf eine Grundebene des weiteren Kontaktflächenkranzes 62a eine zumindest im Wesentlichen gleiche Höhe auf. Die Erhebungen sind in Umfangsrichtung gleichmäßig verteilt angeordnet. In Umfangsrichtung benachbarte Erhebungen sind um einen Winkel von 45 Grad zueinander versetzt. Das Kontaktelement 66a weist eine Kontaktfahne auf. Die Kontaktfahne ist zu einem Anschluss des Kontaktelements 66a vorgesehen.

Das Trägerelement 42a weist auf einer der Kontaktebene abgewandten Seite einen Reliefring auf. Der Reliefring weist eine Form auf, die dem Kontaktelement 64a des Kontaktflächenkranzes 60a entspricht. Das Trägerelement 42a weist entlang des Reliefrings acht Durchbrüche auf. In einem montierten Zustand ist das Kontaktelement 64a in das Trägerelement 42a eingelegt. Jeweils eine Erhebung 156a, 158a ist jeweils einem der Durchbrüche zugeordnet. Jeweils eine Erhebung 156a, 158a ist jeweils an einem der Durchbrüche an der Stirnseite des Trägerelements 42a sichtbar. Das Trägerelement 42a weist auf der der Kontaktebene abgewandten Seite einen weiteren Reliefring auf. Der weitere Reliefring weist eine Form auf, die einer Form des weiteren Kontaktelements 66a entspricht. Das Trägerelement 42a weist entlang des weiteren Reliefrings acht Durchbrüche auf. Das Trägerelement 42a weist insgesamt sechzehn Durchbrüche auf. In einem montierten Zustand ist das weitere Kontaktelement 64a in das Trägerelement 42a eingelegt. Jeweils eine Erhebung ist jeweils einem der Durchbrüche zugeordnet. Jeweils eine Erhebung ist jeweils an einem der Durchbrüche an der Stirnseite des Trägerelements 42a sichtbar.

Die Koppelvorrichtung des Werkzeugbasismoduls 10a weist eine Verriegelungseinheit 72a zu einer Verriegelung der Aufsatzvorrichtung 18a auf (vgl. Figur 3). Die Verriegelungseinheit 72a ist an dem Hauptausgang 14a angeordnet. Die Verriegelungseinheit 72a ist dazu vorgesehen, das Gehäuse 152a der Aufsatzvorrichtung 18a mit dem Gehäuse 130a des Werkzeugbasismoduls 10a zu verriegeln. Die Verriegelungseinheit 72a ist dazu vorgesehen, das Gehäuse 152a der Aufsatzvorrichtung 18a mit dem Gehäuse 130a des Werkzeugbasismoduls 10a axial und verdrehsicher zu verbinden. Die Aufsatzvorrichtung 18a weist eine zu der Verriegelungseinheit 72a korrespondierende Verriegelungseinheit 372a auf. Die Verriegelungseinheit 72a weist zumindest ein Sicherungselement 162a zu einer axialen Sicherung einer Verbindung der Gehäuse 130a, 152a auf. Das Sicherungselement 162a ist in dem vorliegenden Ausführungsbeispiel als eine in Umfangsrichtung umlaufende Nut ausgebildet. Das Sicherungselement 162a ist an dem Gehäuse 130a des Werkzeugbasismoduls 10a angeordnet. In einer alternativen Ausgestaltung kann das Sicherungselement als eine Rippe ausgebildet sein und/oder an der Abtriebswelle 142a angeordnet sein. Die Aufsatzvorrichtung 18a weist ein korrespondierend zu dem Sicherungselement 162a ausgebildetes Sicherungselement 362a (vgl. Figur 2) auf, das zu einem Eingriff in das Sicherungselement 162a vorgesehen ist. Das Sicherungselement 362a ist als Rastelement ausgeführt. Das Rastelement kann zum Beispiel als Rastfeder ausgebildet sein. Das Sicherungselement 362a der Aufsatzvorrichtung 18a dient der axialen Sicherung der Aufsatzvorrichtung 18a an dem Gehäuse 130a. Das Sicherungselement 162a und das Sicherungselement 362a bilden in einem gekoppelten Zustand eine formschlüssige und/oder kraftschlüssige Verbindung aus. In einer alternativen Ausgestaltung kann das Sicherungselement 162a und das Sicherungselement 362a zu einer zumindest teilweise kraftschlüssigen Verbindung vorgesehen sein.

Die Aufsatzvorrichtung 18a umfasst einen Entriegelungsring 164a zum Lösen der Aufsatzvorrichtung 18a von dem Werkzeugbasismodul 10a. Der Entriegelungsring 164a ist Teil der Verriegelungseinheit 372a. Die Verriegelungseinheit 372a bewirkt die lösbare mechanische Anbindung der Aufsatzvorrichtung 18a an dem Gehäuse 130a des Werkzeugbasismoduls 10a. Der Entriegelungsring 164a ist in einem gekoppelten Zustand an einem dem Werkzeugbasismodul 10a zugewandten Ende der Aufsatzvorrichtung 18a angeordnet. Der Entriegelungsring 164a ist in Umfangsrichtung drehbar gelagert auf der Aufsatzvorrichtung 18a angeordnet und zu einer Bedienung von Hand vorgesehen. Der Entriegelungsring 164a ist dazu vorgesehen, das Sicherungselement 362a in Form eines Rastelements zu einer Trennung der Aufsatzvorrichtung 18a von dem Werkzeugbasismodul 10a zu spannen und zu lösen.

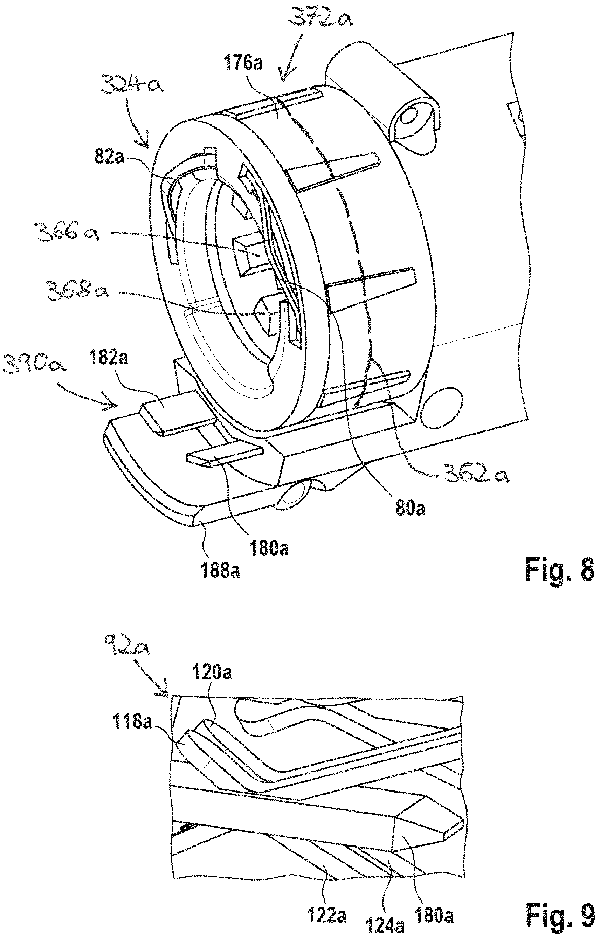

Die Verriegelungseinheit 72a weist ein weiteres Sicherungselement 166a auf, das zu einer Drehsicherung vorgesehen ist. Das weitere Sicherungselement 166a ist in dem vorliegenden Ausführungsbeispiel einstückig mit dem Gehäuse 130a des Werkzeugbasismoduls 10a ausgebildet. Das weitere Sicherungselement 166a ist als ein Zahnkranz ausgebildet und weist acht Zähne 168a auf, die in Umfangsrichtung gleichmäßig verteilt angeordnet sind. Der Übersichtlichkeit halber ist nur einer der Zähne 168a mit einem Bezugszeichen versehen. Die Aufsatzvorrichtung 18a weist eine korrespondierend zu dem weiteren Sicherungselement 166a ausgebildete Aufnahme 170a mit einem Sicherungselement 366a (vgl. Figur 8) auf. Das Sicherungselement 366a ist dementsprechend ebenfalls zur Drehsicherung vorgesehen. Das Sicherungselement 366a ist als ein Zahnkranz ausgebildet, dessen Zähne 368a in Umfangsrichtung gleichmäßig verteilt angeordnet sind. In einem gekoppelten Zustand greift das weitere Sicherungselement 166a in das Sicherungselement 366a der Aufnahme 170a der Aufsatzvorrichtung 18a ein. In einem gekoppelten Zustand überträgt das weitere Sicherungselement 166a über das Sicherungselement 366a in Umfangsrichtung auf die Aufsatzvorrichtung 18a wirkende Kräfte auf das Gehäuse 130a des Werkzeugbasismoduls 10a. Das als Rastelement ausgebildete Sicherungselement 362a greift in das als Nut ausgebildete Sicherungselement 162a ein und überträgt in axialer Richtung auf die Aufsatzvorrichtung 18a wirkende Kräfte auf das Gehäuse 130a des Werkzeugbasismoduls 10a.

Die Werkzeugaufnahme 154a und die zumindest eine Verriegelungseinheit 72a sind bezogen auf eine Richtung der Hauptabtriebsachse 68a zumindest im Wesentlichen auf einer gleichen Seite der Kontaktebene der elektrische Schnittstelle 24a angeordnet. Die Werkzeugaufnahme 154a, das als Nut ausgebildete axiale Sicherungselement 162a und das weitere Sicherungselement 166a sind, bezogen auf eine Richtung der Hauptabtriebsachse 68a, zumindest im Wesentlichen auf einer gleichen Seite der Kontaktebene der elektrische Schnittstelle 24a angeordnet. Die Getriebeeinheit 144a des Werkzeugbasismoduls 10a ist bezogen auf die Richtung der Hauptabtriebsachse 68a auf einer anderen Seite der Kontaktebene als die Verriegelungseinheit 72a und/oder die Werkzeugaufnahme 154a angeordnet.

Die elektrische Schnittstelle 324a der Aufsatzvorrichtung 18a weist zumindest ein Kontaktelement 76a, 78a (vgl. Figur 2) bzw. 80a, 82a (vgl. Figur 8) auf. In der dargestellten Ausführungsform sind die Kontaktelemente 76a, 78a dazu vorgesehen, eine Schließbewegung zu einer Anbindung der Aufsatzvorrichtung 18a in eine Reibbewegung zu übersetzen, die zumindest im Wesentlichen senkrecht zu einer Richtung der Schließbewegung ausgerichtet ist (vgl. Figur 2). Die elektrische Schnittstelle 324a der Aufsatzvorrichtung 18a ist korrespondierend zu der weiteren elektrischen Schnittstelle 24a des Werkzeugbasismoduls 10a ausgebildet und bildet damit eine elektrische Gegenschnittstelle. Die Gegenschnittstelle weist ein erstes der Kontaktelemente 76a und ein weiteres der Kontaktelemente 78a auf. Das erste Kontaktelement 76a ist zu einem Kontakt mit dem Kontaktelement 64a der weiteren elektrischen Schnittstelle 24a vorgesehen. Das weitere Kontaktelement 78a ist zu einem Kontakt mit dem weiteren Kontaktelement 66a der weiteren elektrischen Schnittstelle 24a vorgesehen. Die Kontaktelemente 76a, 78a der Gegenschnittstelle sind in der dargestellten Ausführungsform als Federkontaktelemente ausgebildet. Die Kontaktelemente 76a, 78a der Gegenschnittstelle sind dazu vorgesehen, eine Kontaktfederkraft in axialer Richtung bereitzustellen. Die Kontaktelemente 76a, 78a sind als Bogenfedern ausgebildet. Die Kontaktelemente 76a, 78a weisen jeweils eine Bogenwölbung in axialer Richtung auf. In einem gekoppelten Zustand weist das erste Kontaktelement 76a der Gegenschnittstelle einen radialen Abstand von der Abtriebswelle 142a auf, der dem radialen Abstand des Kontaktelements 64a der weiteren elektrischen Schnittstelle 24a von der Abtriebswelle 142a entspricht und das weitere Kontaktelement 78a der Gegenschnittstelle weist einen radialen Abstand von der Abtriebswelle 142a auf, der dem radialen Abstand des weiteren Kontaktelements 66a der weiteren elektrischen Schnittstelle 24a von der Abtriebswelle 142a entspricht.

Die Kontaktelemente 76a, 78a der elektrischen Schnittstelle 324a sind jeweils einseitig zumindest im Wesentlichen unbeweglich fest mit dem Gehäuse 152a der Aufsatzvorrichtung 18a verbunden (vgl. Figur 5). Bei einem Koppelvorgang wird die Aufsatzvorrichtung 18a in Koppelrichtung 40a auf das Werkzeugbasismodul 10a aufgesetzt und die Kontaktelemente 76a, 78a der Gegenschnittstelle kommen mit den Kontaktelementen 64a, 66a der weiteren elektrischen Schnittstelle 24a in Kontakt. Die Kontaktelemente 76a, 78a weisen jeweils einen Bogenscheitel auf, der mit den Kontaktelementen 64a, 66a der weiteren elektrischen Schnittstelle 24a in Kontakt kommt. Die Bogenscheitel werden in einem weiteren Verlauf der Schließbewegung an den Kontaktelementen 64a, 66a der weiteren elektrischen Schnittstelle 24a entlanggeschoben und führen eine Reibbewegung gegenüber den Kontaktelementen 64a, 66a der weiteren elektrischen Schnittstelle 24a aus. Die Reibbewegung ermöglicht es als eine Reinigungsbewegung einen Belag auf den Kontaktflächen 28a, 30a, 32a, 34a der Kontaktelemente 64a, 66a, 76a, 78a zu entfernen.

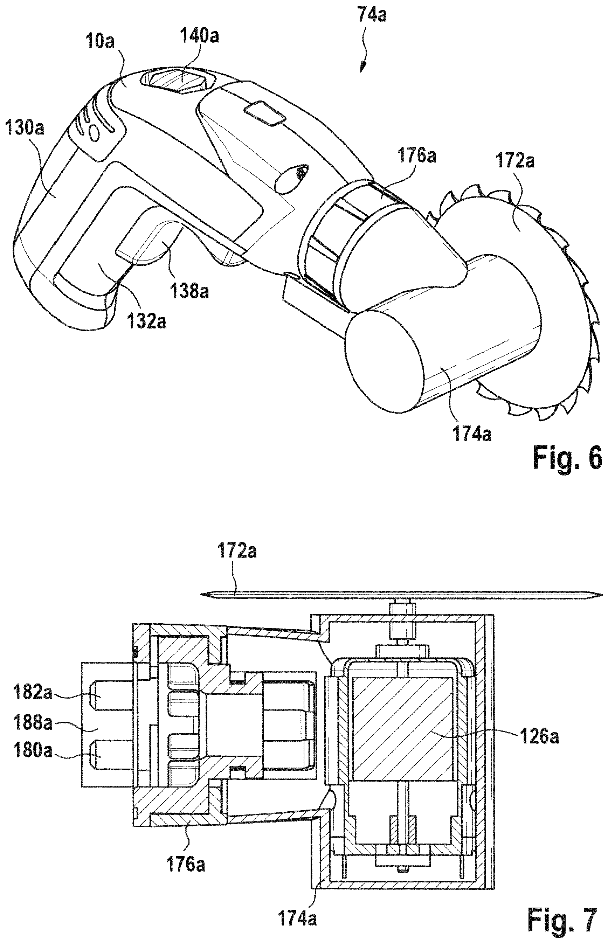

Die weitere Aufsatzvorrichtung 20a weist ein Sägeblatt 172a auf (vgl. Figur 6). Die weitere Aufsatzvorrichtung 20a weist eine korrespondierend zu der als Leistungsschnittstelle ausgebildeten elektrischen Schnittstelle 90a ausgebildete elektrische Schnittstelle 390a als Gegenschnittstelle auf. Die weitere Aufsatzvorrichtung 20a weist eine korrespondierend zu der weiteren elektrischen Schnittstelle 24a ausgebildete elektrische Schnittstelle 324a als weitere Gegenschnittstelle auf. Die als weitere Gegenschnittstelle ausgebildete elektrische Schnittstelle 324a weist zwei Kontaktelemente 80a, 82a auf, die analog zu den Kontaktelementen 76a, 78a der ersten Aufsatzvorrichtung 18a ausgebildet sind. Die weitere Aufsatzvorrichtung 20a ist zu einer elektrischen Anbindung mittels der elektrischen Schnittstelle 90a und der weiteren elektrischen Schnittstelle 16a vorgesehen. Die weitere Aufsatzvorrichtung 20a umfasst ein Gehäuse 174a und einen Entriegelungsring 176a, der analog zu dem Entriegelungsring 164a der als Winkelaufsatz ausgebildeten Aufsatzvorrichtung 18a ausgebildet ist.

Die weitere Aufsatzvorrichtung 20a umfasst zumindest eine elektrische Energienutzungseinheit 126a, die als ein Elektromotor ausgebildet ist. Die Energienutzungseinheit 126a ist zu einem Antrieb des Sägeblatts 172a vorgesehen (vgl. Figur 7). Die Energienutzungseinheit 126a ist zu einem Antrieb des Sägeblatts 172a unabhängig von der Antriebseinheit 12a des Werkzeugbasismoduls 10a vorgesehen. Die zumindest eine elektrische Energienutzungseinheit 126a weist eine maximale Leistungsaufnahme auf, die wenigstens 90 Prozent einer maximalen Leistungsaufnahme der Antriebseinheit 12a des Werkzeugbasismoduls 10a entspricht. Es ist denkbar, dass die weitere Aufsatzvorrichtung 20a eine weitere elektrische Energienutzungseinheit, beispielsweise eine Leuchte, umfasst, die in zumindest einem Betriebszustand über die weitere elektrische Schnittstelle 24a mit Energie versorgt wird.

Die als Leistungsschnittstelle ausgebildete elektrische Schnittstelle 90a weist zumindest zwei Steckelemente 92a, 94a auf. Die beiden Steckelemente 92a, 94a sind gleichartig ausgeführt. Die elektrische Schnittstelle 90a weist ferner zumindest ein Isolatorelement 104a auf, das zumindest in einem angebundenen Zustand räumlich zwischen den Steckelementen 92a, 94a angeordnet ist. In dem vorliegenden Ausführungsbeispiel sind die Steckelemente 92a, 94a zur Aufnahme von korrespondierend zu den Steckelementen 92a, 94a ausgebildete Gegensteckelementen 180a, 182a der Aufsatzvorrichtung 20a ausgebildet. Die Steckelemente 92a, 94a sind als Tulpenstecker ausgeführt. Die Gegensteckelemente 180a, 182a sind in dem vorliegenden Ausführungsbeispiel als Stifte oder Klingen ausgebildet. Die Steckelemente 92a, 94a sind jeweils in einer Öffnung 184a, 186a in dem Trägerelement 42a angeordnet. Die als Stifte oder Klingen ausgebildeten Gegensteckelemente 180a, 182a der Aufsatzvorrichtung 20a durchdringen in einem angebundenen Zustand die Öffnungen 184a, 186a. Das Isolatorelement 104a ist in dem vorliegenden Ausführungsbeispiel als ein Steg aus einem elektrischen Nichtleiter ausgebildet. Das Isolatorelement 104a ist in dem vorliegenden Ausführungsbeispiel als ein Steg aus Kunststoff ausgebildet. Es ist in einer alternativen, nicht dargestellten Ausführung denkbar, dass die Steckelemente 92a, 94a in Form von Tulpensteckern an der Aufsatzvorrichtung 20a ausgebildet sind, und dass das Werkzeugbasismodul 10a korrespondierend zu den Steckelementen 92a, 94a ausgebildete Gegensteckelemente 180a, 182a in Form von Stiften oder Klingen ausgebildete Aufnahmen aufweist.

Die Koppelvorrichtung umfasst ein mechanisches Schutzelement 188a zu einem Schutz der als Stifte ausgebildeten Gegensteckelemente 180a, 182a der Aufsatzvorrichtung 20a vor einer mechanischen Einwirkung. Das Schutzelement 188a ist als ein Gehäusevorsprung ausgebildet. Das Schutzelement 188a ist an einem Rand des Gehäuses 174a der Aufsatzvorrichtung 20a angeordnet (vgl. Figur 8). Das Schutzelement 188a ragt axial über den Entriegelungsring 164a der Aufsatzvorrichtung 20a hinaus. Das Schutzelement 188a ist, bezogen auf die Koppelrichtung 40a, axial und radial auf einer gleichen Seite des Gehäuses 174a wie die Gegensteckelemente 180a, 182a angeordnet.

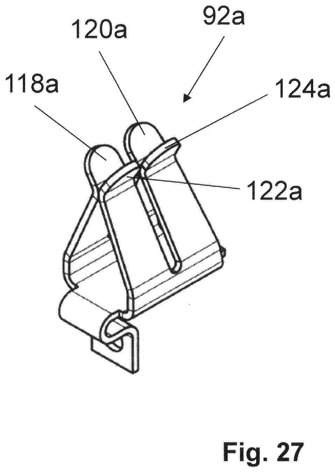

Die Steckelemente 92a, 94a der als Leistungsschnittstelle ausgebildeten elektrischen Schnittstelle 90a weisen zumindest ein Kontaktelement 118a, 120a, 122a, 124a auf, das zu einer Reinigungsbewegung einer Kontaktfläche, insbesondere zu einer Schleifbewegung, vorgesehen ist (vgl. Figuren 9, 27). Die Steckelemente 92a, 94a der elektrischen Schnittstelle 90a sind analog zueinander ausgebildet, weshalb im Folgenden nur ein Steckelement 92a näher beschrieben wird. Das Steckelement 92a ist als Tulpenstecker ausgebildet. Das Steckelement 92a weist in dem vorliegenden Ausführungsbeispiel zwei Paare von Kontaktelementen 118a, 120a, 122a, 124a auf. Die Kontaktelemente 118a, 120a, 122a, 124a sind jeweils als Kontaktfedern ausgebildet. Kontaktelemente 118a, 120a, 122a, 124a eines Paares sind gegeneinander vorgespannt und weisen jeweils einen Bogenscheitel auf, an dem sie sich berühren. Die Kontaktelemente 118a, 120a, 122a, 124a eines Paares sind analog zueinander ausgebildet und spiegelbildlich zueinander angeordnet. Die Paare von Kontaktelementen 118a, 120a, 122a, 124a, sind bezogen auf eine Haupterstreckungsrichtung der Kontaktelemente 118a, 120a, 122a, 124a, seitlich versetzt zueinander angeordnet. Es ist denkbar, dass die Aufnahme nur ein Paar von Kontaktelementen oder eine von zwei abweichende größere Zahl von Paaren von Kontaktelementen aufweist. Die Kontaktelemente 118a, 120a, 122a, 124a eines Paares von Kontaktelementen 118a, 120a, 122a, 124a sind jeweils dazu vorgesehen, bei einem Koppelvorgang mit einem Stift oder einer Klinge 180a, 182a der Aufsatzvorrichtung 20a zusammenzuwirken und einen elektrischen Kontakt herzustellen. Die Kontaktelemente 118a, 120a, 122a, 124a und der Stift oder die Klinge 180a, 182a weisen jeweils eine Kontaktfläche auf. Die Kontaktelemente 118a, 120a, 122a, 124a führen relativ zu dem Stift bei einem Koppelvorgang eine Schleifbewegung aus, welche einer Reinigungsbewegung der Kontaktflächen entspricht.

Die Kontaktelemente 118a, 120a, 122a, 124a der als Leistungsschnittstelle ausgebildeten elektrischen Schnittstelle 90a beaufschlagen in einem angebundenen Zustand die Kontaktflächen mit einer Presskraft von wenigstens 5 N. Die Presskraft eines ersten Kontaktelements 118a, 122a eines Paares ist jeweils entgegengesetzt zu der Presskraft eines zweiten Kontaktelements 120a, 124a des Paares ausgerichtet. In dem angebundenen Zustand sind die Kontaktelemente 118a, 120a, 122a, 124a auf einander gegenüberliegenden Seiten des zugeordneten Gegensteckelements 180a, 182a der Aufsatzvorrichtung 20a mit dem Gegensteckelement 180a, 182a in Kontakt.

Bei einem Verfahren zu einer Anbindung der Aufsatzvorrichtungen 18a, 20a, 22a an das Werkzeugbasismodul 10a, koppelt die als eine Leistungsschnittstelle ausgebildete elektrische Schnittstelle 90a der Koppelvorrichtung eine erste elektrische Anbindung der Aufsatzvorrichtung 18a, 20a, 22a mit der mechanischen Anbindung und die weitere elektrische Schnittstelle 24a der Koppelvorrichtung koppelt eine weitere elektrische Anbindung der Aufsatzvorrichtungen 18a, 20a, 22a mit der mechanischen Anbindung.

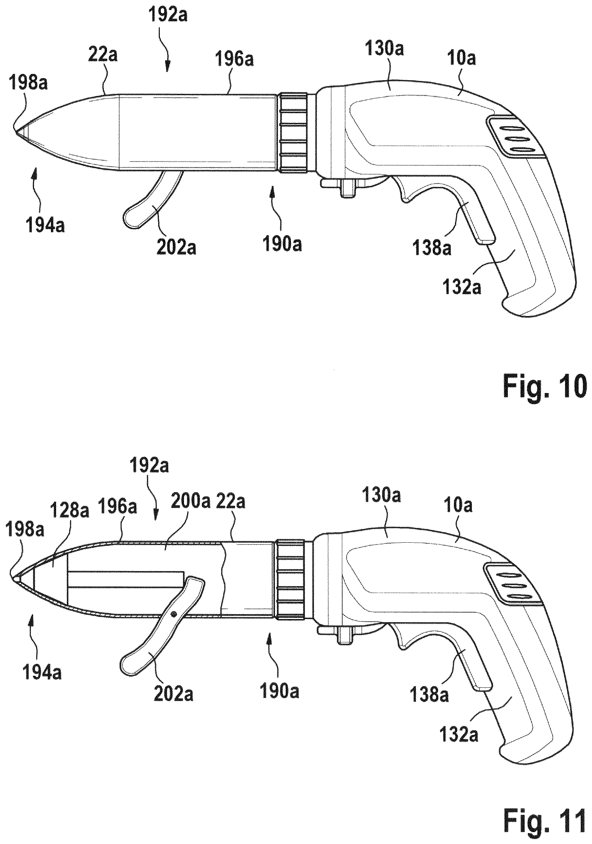

Die als Heißklebeaufsatz ausgebildete dritte Aufsatzvorrichtung 22a weist eine Energienutzungseinheit 128a auf, die als eine Klebemittelheizung ausgebildet ist. Die Aufsatzvorrichtung 22a weist einen Koppelbereich 190a, einen Klebemittelvorratsbereich 192a und einen Heizbereich 194a auf, die in einer axialen Richtung benachbart zueinander angeordnet sind. Der Klebemittelvorratsbereich 192a ist in dem vorliegenden Ausführungsbeispiel als ein Einschubfach ausgebildet. Die dritte Aufsatzvorrichtung 22a weist ein Gehäuse 196a mit einer konischen Grundform auf (vgl. Figur 10). Das Gehäuse 196a verjüngt sich von dem Koppelbereich 190a über den Klebemittelvorratsbereich 192a zu dem Heizbereich 194a hin. Der Heizbereich 194a ist kegelförmig ausgebildet und weist eine Klebespitze 198a als Arbeitsausgang 354a der Aufsatzvorrichtung 22a auf, die eine Düse als Auslass für ein Klebemittel aufweist. Das Gehäuse 196a bildet in dem Klebemittelvorratsbereich 192a einen Klebemittelvorratsbehälter 200a aus, der zur Aufnahme 170a eines Klebemittels, beispielsweise eines Klebesticks, vorgesehen ist (vgl. Figur 11). Es ist auch denkbar, dass der Klebemittelvorratsbehälter 200a für ein als Granulat ausgebildetes Klebemittel vorgesehen ist. Die als Klebemittelheizung ausgebildete Energienutzungseinheit 128a ist in dem Heizbereich 194a der Aufsatzvorrichtung 22a angeordnet und weist eine Heizspirale auf. Die Energienutzungseinheit 128a ist zu einer Umwandlung von elektrischer Energie der Energieversorgung 136a in Wärme vorgesehen und erwärmt in einem Betriebszustand das Klebemittel. In dem vorliegenden Ausführungsbeispiel ist das Klebemittel als ein Schmelzklebemittel ausgebildet. Die Energienutzungseinheit 128a wird in zumindest einem Betriebszustand über die als Leistungsschnittstelle ausgebildete elektrische Schnittstelle 90a mit Energie versorgt.

Die dritte Aufsatzvorrichtung 22a weist eine Vorschubeinheit mit einem Bedienelement 202a auf, das für einen Klebemitteltransport vorgesehen ist. In dem vorliegenden Ausführungsbeispiel ist das Bedienelement 202a als ein Hebel ausgebildet. Das Bedienelement 202a durchdringt das Gehäuse 196a und weist einen äußeren Hebelarm und einen inneren Hebelarm auf. Das Bedienelement 202a weist räumlich zwischen dem äußeren Hebelarm und dem inneren Hebelarm einen Lagerpunkt auf, der als ein Drehpunkt ausgebildet ist und in dem das Bedienelement 202a schwenkbar gegenüber dem Gehäuse 196a gelagert ist. In einem montierten Zustand sind in dem vorliegenden Ausführungsbeispiel eine Haupterstreckungsrichtung des Handgriffs 132a, die Hauptabtriebsachse 68a des Hauptausgangs 14a und das Bedienelement 202a angeordnet. Es ist auch denkbar, dass das Bedienelement 202a, bezogen auf die Hauptabtriebsachse 68a, verdreht angeordnet ist. Es ist ferner denkbar, dass das Bedienelement 202a als ein Schiebeelement ausgebildet ist und/oder ein Federelement umfasst, das dazu vorgesehen ist, eine Kraft zu einem Transport des Klebemittels oder eine Rückstellkraft bereitzustellen. Es ist weiterhin denkbar, dass die Aufsatzvorrichtung 22a eine Vorschubeinheit für einen Klebemitteltransport ohne Bedienelement 202a aufweist. In einer alternativen Ausgestaltung kann die Aufsatzvorrichtung 22a eine Vorschubeinheit aufweisen, die als ein mit der Abtriebswelle 142a des Werkzeugbasismoduls 10a mechanisch koppelbarer Lineartrieb, beispielsweise ein Schraubentrieb, ausgebildet ist und dazu vorgesehen ist, eine Drehbewegung der Antriebseinheit 12a des Werkzeugbasismoduls 10a für einen Klebemitteltransport zu nutzen.

In einem Klebevorgang betätigt ein Benutzer den an dem Werkzeugbasismodul 10a angeordneten Hauptschalter 138a und verbindet die Energienutzungseinheit 128a der Aufsatzvorrichtung 22a mit der Energieversorgung 136a des Werkzeugbasismoduls 10a. Die als Klebemittelheizung ausgebildete Energienutzungseinheit 128a erwärmt ein in dem Heizbereich 194a der Aufsatzvorrichtung 22a befindliches Klebemittel. Der Benutzer betätigt das Bedienelement 202a der Aufsatzvorrichtung 22a zu einem Klebemitteltransport und schiebt so das Klebemittel aus dem Klebemittelvorratsbehälter 200a in den Heizbereich 194a nach, wodurch das Klebemittel aus der Düse der Klebespitze 198a austritt und auf einen zu klebenden Körper gelangt.

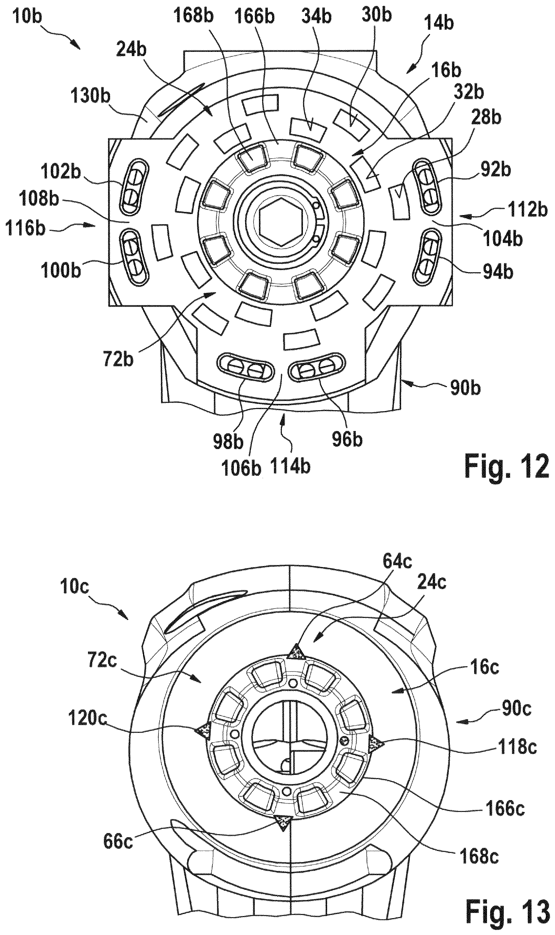

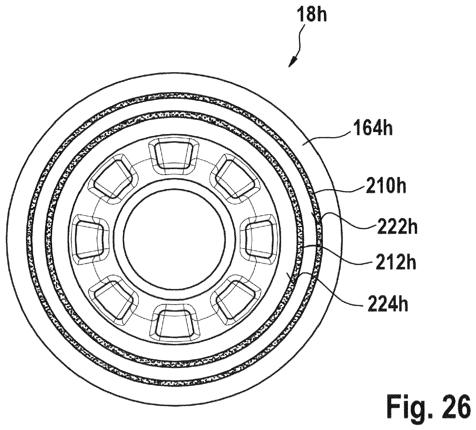

In den Figuren 12 bis 26 sind 7 weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 11, verwiesen werden kann. Zur Unterscheidung der Ausführungsbeispiele ist der Buchstabe a den Bezugszeichen des Ausführungsbeispiels in den Figuren 1 bis 11 nachgestellt. In den Ausführungsbeispielen der Figuren 12 bis 26 ist der Buchstabe a durch die Buchstaben b bis h ersetzt.

Figur 12 zeigt ein Werkzeugbasismodul 10b zu einer eigenständigen Nutzung eines weiteren Ausführungsbeispiels. Das Werkzeugbasismodul 10b weist eine nicht näher dargestellte Energienutzungseinheit auf, sowie einen Hauptausgang und eine Koppelvorrichtung, die eine mechanische Schnittstelle 16b zu einer antriebstechnischen mechanischen Anbindung zumindest einer Aufsatzvorrichtung an dem Hauptausgang aufweist. Die Koppelvorrichtung umfasst eine elektrische Schnittstelle 90b zu einer Übertragung einer großen Leistung und/oder eines großen Stroms, die zu einer mit der mechanischen Anbindung gekoppelten elektrischen Anbindung der zumindest einen Aufsatzvorrichtung an dem Hauptausgang vorgesehen ist. Die elektrische Schnittstelle 90b ist als eine Leistungsschnittstelle ausgebildet.

Analog zu dem vorhergehenden Ausführungsbeispiel weist die Koppelvorrichtung eine weitere elektrische Schnittstelle 24b zu einer Übertragung einer kleinen Leistung und/oder eines kleinen Stroms auf, die zu einer mit der mechanischen Anbindung gekoppelten weiteren elektrischen Anbindung der zumindest einen Aufsatzvorrichtung an dem Hauptausgang vorgesehen ist. Es ist denkbar, dass die Koppelvorrichtung lediglich die als Leistungsschnittstelle ausgebildete elektrische Schnittstelle 90b umfasst, d.h. dass die weitere elektrische Schnittstelle 24b entfällt.

Im Unterschied zu dem vorhergehenden Ausführungsbeispiel weist die als Leistungsschnittstelle ausgebildete Schnittstelle 24b zu einer Übertragung eines hohen Stroms und/oder einer hohen Leistung zumindest zwei artgleiche Kontaktschnittstellen 112b, 114b, 116b auf. Jede der Kontaktschnittstellen 112b, 114b, 116b umfasst jeweils zwei Steckelemente 92b, 94b, 96b, 98b, 100b, 102b, die in zumindest einem Betriebszustand eine unterschiedliche elektrische Polung aufweisen. Jede der Kontaktschnittstellen 112b, 114b, 116b weist jeweils ein Isolatorelement 104b, 106b, 108b auf. Jedes der Isolatorelemente 104b, 106b, 108b ist zumindest in einem angebundenen Zustand räumlich zwischen jeweils zweien der Steckelemente 92b, 94b, 96b, 98b, 100b, 102b angeordnet. Die Kontaktschnittstellen 112b, 114b, 116b sind redundant zueinander ausgebildet. Die Kontaktschnittstellen 112b, 114b, 116b sind funktional gleichwertig zueinander ausgebildet. In dem vorliegenden Ausführungsbeispiel weist die als Leistungsschnittstelle ausgebildete elektrische Schnittstelle 24b drei Kontaktschnittstellen 112b, 114b, 116b auf. Die Steckelemente 92b, 94b, 96b, 98b, 100b, 102b zweier unterschiedlicher Kontaktschnittstellen 112b, 114b, 116b sind in Umfangsrichtung versetzt zueinander angeordnet. Die Steckelemente 92b, 94b, 96b, 98b, 100b, 102b zweier in Umfangsrichtung benachbart angeordneter Kontaktschnittstellen 112b, 114b, 116b weisen Zwischenwinkel von 90 Grad, 90 Grad und 180 Grad auf. Die Positionen zweier Kontaktschnittstellen 112b, 114b, 116b gehen durch eine Drehung um die Hauptabtriebsachse des Werkzeugbasismoduls 10b ineinander über. Die Kontaktschnittstellen 112b, 114b, 116b sind dazu vorgesehen, die Aufsatzvorrichtung in drei unterschiedlichen Winkelpositionen, bezogen auf die Hauptabtriebsachse des Werkzeugbasismoduls 10b, elektrisch an das Werkzeugbasismodul 10b anzubinden.

Die elektrischen Schnittstellen 24b, 90b weisen eine gemeinsame Koppelrichtung auf. Die mechanische Schnittstelle 16b und die elektrischen Schnittstellen 24b, 90b weisen eine gemeinsame Koppelrichtung auf. Die weitere elektrische Schnittstelle 24b weist analog zu dem vorhergehenden Ausführungsbeispiel sechzehn Kontaktflächen 28b, 30b, 32b, 34b auf, die zumindest im Wesentlichen in einer Kontaktebene angeordnet ist, die zumindest im Wesentlichen senkrecht zu der Koppelrichtung angeordnet ist.

Die Koppelvorrichtung des Werkzeugbasismoduls 10b weist eine Verriegelungseinheit 72b zu einer Verriegelung der Aufsatzvorrichtung auf. Die Verriegelungseinheit 72b ist an einem Hauptausgang 14b angeordnet. Die Verriegelungseinheit 72b ist dazu vorgesehen, ein Gehäuse der Aufsatzvorrichtung mit einem Gehäuse 130b des Werkzeugbasismoduls 10b zu verriegeln. Die Verriegelungseinheit 72b weist ein nicht näher dargestelltes Sicherungselement zu einer axialen Sicherung einer Verbindung der Gehäuse 130b des Werkzeugbasismoduls 10b mit einem Gehäuse der Aufsatzvorrichtung auf.

Die Verriegelungseinheit 72b weist ein weiteres Sicherungselement 166b auf, das zu einer Drehsicherung vorgesehen ist. Das weitere Sicherungselement 166b ist als ein Zahnkranz ausgebildet und weist acht Zähne 168b auf, die in Umfangsrichtung gleichmäßig verteilt angeordnet sind. Der Übersichtlichkeit halber ist nur einer der Zähne 168b mit einem Bezugszeichen versehen.

Figur 13 zeigt ein Werkzeugbasismodul 10c eines weiteren Ausführungsbeispiels. Das Werkzeugbasismodul 10c ist zu einer insbesondere eigenständigen Nutzung vorgesehen. Das Werkzeugbasismodul 10c weist eine nicht näher dargestellte Energienutzungseinheit auf, sowie einen Hauptausgang und eine Koppelvorrichtung, die eine mechanische Schnittstelle 16c zu einer antriebstechnischen mechanischen Anbindung zumindest einer Aufsatzvorrichtung an dem Hauptausgang aufweist. Zu einer verbesserten Übersicht ist in Figur 13 eine Abtriebswelle des Hauptausgangs weggelassen. Die Koppelvorrichtung umfasst eine elektrische Schnittstelle 90c zu einer Übertragung einer großen Leistung und/oder eines großen Stroms, die zu einer mit der mechanischen Anbindung gekoppelten elektrischen Anbindung der zumindest einen Aufsatzvorrichtung an dem Hauptausgang vorgesehen ist. Die elektrische Schnittstelle 90c ist als eine Leistungsschnittstelle ausgebildet.

Analog zu dem vorhergehenden Ausführungsbeispiel weist die Koppelvorrichtung eine weitere elektrische Schnittstelle 24c zu einer Übertragung einer kleinen Leistung und/oder eines kleinen Stroms auf, die zu einer mit der mechanischen Anbindung gekoppelten weiteren elektrischen Anbindung der zumindest einen Aufsatzvorrichtung an dem Hauptausgang vorgesehen ist. Es ist denkbar, dass die Koppelvorrichtung lediglich die als Leistungsschnittstelle ausgebildete elektrische Schnittstelle 90c umfasst, d.h. dass die weitere elektrische Schnittstelle 24c entfällt.

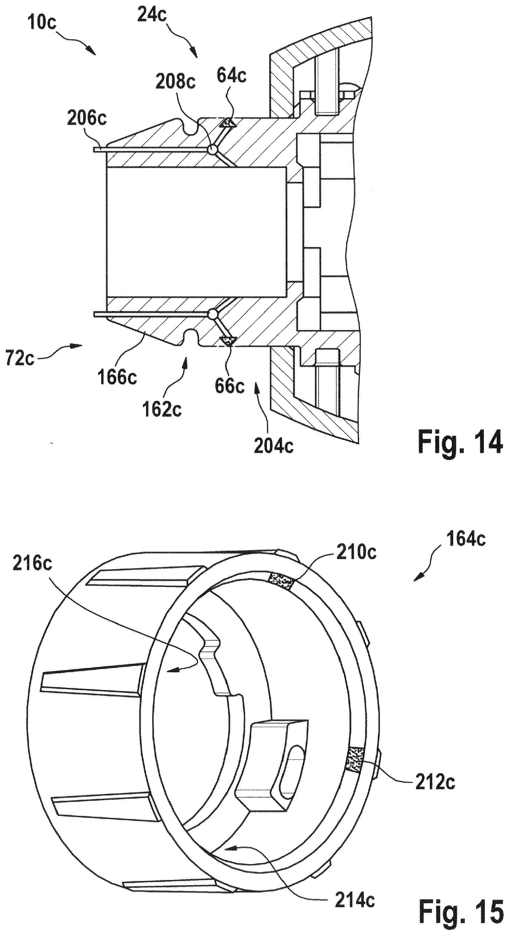

Analog zu den vorhergehenden Ausführungsbeispielen weist das Werkzeugbasismodul 10c eine Verriegelungseinheit 72c zu einer Verriegelung der Aufsatzvorrichtung auf. Die Verriegelungseinheit 72c ist an dem Hauptausgang angeordnet. Die Verriegelungseinheit 72c weist zumindest ein Sicherungselement 162c zu einer axialen Sicherung einer Verbindung der Gehäuse auf (vgl. Figur 14). Das Sicherungselement 162c ist in dem vorliegenden Ausführungsbeispiel als eine in Umfangsrichtung umlaufende Nut ausgebildet. Die Verriegelungseinheit 72c weist ein weiteres Sicherungselement 166c auf, das zu einer Drehsicherung vorgesehen ist. Das weitere Sicherungselement 166c ist in dem vorliegenden Ausführungsbeispiel einstückig mit dem Gehäuse des Werkzeugbasismoduls 10c ausgebildet. Das weitere Sicherungselement 166c ist als ein Zahnkranz ausgebildet und weist acht Zähne 168c auf, die in Umfangsrichtung gleichmäßig verteilt angeordnet sind. Der Übersichtlichkeit halber ist nur einer der Zähne 168c mit einem Bezugszeichen versehen.

Die als Leistungsschnittstelle ausgebildete elektrische Schnittstelle 90c und die weitere elektrische Schnittstelle 24c sind in die Verriegelungseinheit 72c integriert. Im Unterschied zu den vorhergehenden Ausführungsbeispielen weisen die als Leistungsschnittstelle ausgebildete elektrische Schnittstelle 90c und die weitere elektrische Schnittstelle 90c analog zueinander ausgebildete Kontaktelemente 64c, 66c, 118c, 120c auf. Die Kontaktelemente 64c, 66c, 118c, 120c sind jeweils an einem Außenumfang an einem Sockelabschnitt 204c der Verriegelungseinheit 72c angeordnet. In Umfangsrichtung benachbart zueinander angeordnete Kontaktelemente 64c, 66c, 118c, 120c weisen einen Zwischenwinkel von zumindest im Wesentlichen 90 Grad auf, bezogen auf eine Hauptabtriebsachse des Hauptausgangs. Die Kontaktelemente 118c, 120c der als Leistungsschnittstelle ausgebildeten elektrischen Schnittstelle 90c sind einander gegenüberliegend angeordnet. Die Kontaktelemente 64c, 66c der weiteren elektrischen Schnittstelle 90c sind einander gegenüberliegend angeordnet. Im Folgenden wird nur eines der Kontaktelemente 64c näher beschrieben. Das Kontaktelement 64c umfasst einen axial beweglich in dem weiteren Sicherungselement 166c gelagerten Stift 206c. In einem ungekoppelten Zustand ragt der Stift 206c über eine Stirnseite des Sicherungselements 166c hinaus. Der Stift 206c ist dazu vorgesehen, bei einem Koppelvorgang verschoben zu werden. Die Kontaktstelle weist ein Gelenk 208c auf, dass den Stift 206c mit einer Kontaktfläche des Kontaktelements 64c verbindet und das dazu vorgesehen ist, eine axiale Bewegung des Stifts in eine radiale Bewegung der Kontaktfläche nach außen zu übersetzen.

Figur 15 zeigt einen Entriegelungsring 164c der Aufsatzvorrichtung. An dem Entriegelungsring 164c sind zu den Kontaktelementen 64c, 66c, 118c, 120c korrespondierende Kontaktelemente 210c, 212c, 214c, 216c angeordnet. Die Kontaktelemente 210c, 212c, 214c, 216c der Aufsatzvorrichtung sind entsprechend den Kontaktelementen 64c, 66c, 118c, 120c der elektrischen Schnittstelle 90c in Umfangsrichtung verteilt angeordnet. Die Kontaktelemente 210c, 212c, 214c, 216c des Entriegelungsrings 164c kommen bei der Koppelbewegung mit den Kontaktflächen der Kontaktelemente 64c, 66c, 118c, 120c in Kontakt. Es ist auch denkbar, dass die Kontaktelemente 64c, 66c, 118c, 120c alle einer einzigen elektrischen Schnittstelle 24c, 90c zugeordnet sind und eine Anbindung der Aufsatzvorrichtung in zwei verschiedenen Winkelpositionen ermöglichen. In dem vorliegenden Ausführungsbeispiel ist ein axialer Kontaktbereich der elektrischen Schnittstellen 24c, 90c räumlich in axialer Richtung zwischen dem axialen Sicherungselement 162c und einer Werkzeugaufnahme des Werkzeugbasismoduls 10c angeordnet.

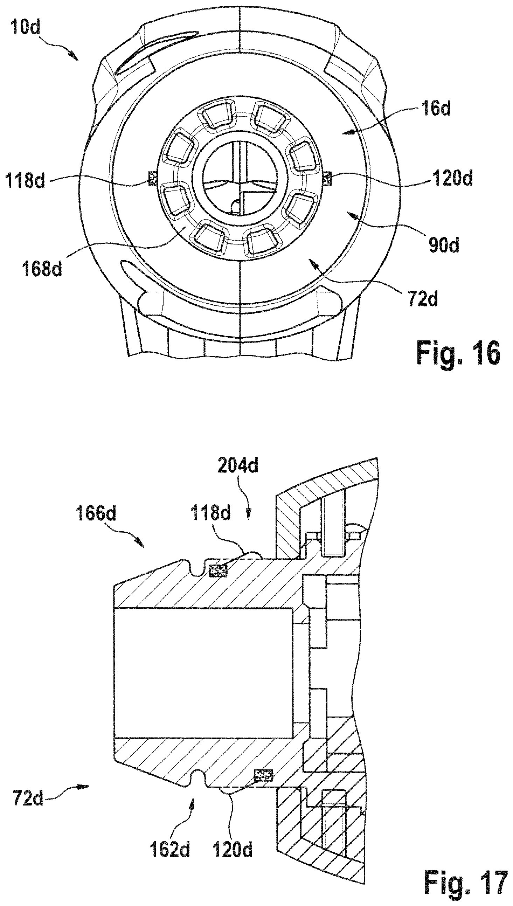

Figur 16 zeigt ein Werkzeugbasismodul 10d eines weiteren Ausführungsbeispiels. Das Werkzeugbasismodul 10d ist zu einer insbesondere eigenständigen Nutzung vorgesehen. Das Werkzeugbasismodul 10d weist eine nicht näher dargestellte Energienutzungseinheit auf, sowie einen Hauptausgang und eine Koppelvorrichtung, die eine mechanische Schnittstelle 16d zu einer antriebstechnischen mechanischen Anbindung zumindest einer Aufsatzvorrichtung an dem Hauptausgang aufweist. Zu einer verbesserten Übersicht ist in Figur 16 eine Abtriebswelle des Hauptausgangs weggelassen. Die Koppelvorrichtung umfasst eine elektrische Schnittstelle 90d zu einer Übertragung einer großen Leistung und/oder eines großen Stroms, die zu einer mit der mechanischen Anbindung gekoppelten elektrischen Anbindung der zumindest einen Aufsatzvorrichtung an dem Hauptausgang vorgesehen ist. Die elektrische Schnittstelle 90d ist als eine Leistungsschnittstelle ausgebildet. Das Werkzeugbasismodul 10d weist in dem vorliegenden Ausführungsbeispiel keine weitere elektrische Schnittstelle auf. Es ist auch denkbar, dass die elektrische Schnittstelle 90d als eine Schnittstelle zu einer Übertragung von einer kleinen Leistung und/oder von einem kleinen Strom vorgesehen ist.

Analog zu den vorhergehenden Ausführungsbeispielen weist das Werkzeugbasismodul 10d eine Verriegelungseinheit 72d zu einer Verriegelung der Aufsatzvorrichtung auf. Die Verriegelungseinheit 72d ist an dem Hauptausgang angeordnet. Die Verriegelungseinheit 72d weist zumindest ein Sicherungselement 162d zu einer axialen Sicherung einer Verbindung der Gehäuse auf. Das Sicherungselement 162d ist in dem vorliegenden Ausführungsbeispiel als eine in Umfangsrichtung umlaufende Nut ausgebildet (vgl. Figur 17). Die Verriegelungseinheit 72d weist ein weiteres Sicherungselement 166d auf, das zu einer Drehsicherung vorgesehen ist. Das weitere Sicherungselement 166d ist in dem vorliegenden Ausführungsbeispiel einstückig mit dem Gehäuse des Werkzeugbasismoduls 10d ausgebildet. Das weitere Sicherungselement 166d ist als ein Zahnkranz ausgebildet und weist acht Zähne 168d auf, die in Umfangsrichtung gleichmäßig verteilt angeordnet sind. Der Übersichtlichkeit halber ist nur einer der Zähne 168d mit einem Bezugszeichen versehen.

Die als Leistungsschnittstelle ausgebildete elektrische Schnittstelle 90d ist in die Verriegelungseinheit 72d integriert. Die elektrische Schnittstelle 90d weist zwei Kontaktelemente 118d, 120d auf. Die Kontaktelemente 118d, 120d sind jeweils an einem Außenumfang an einem Sockelabschnitt 204d der Verriegelungseinheit 72d angeordnet. Die Kontaktelemente 118d, 120d sind im Unterschied zu den vorhergehenden Ausführungsbeispielen axial versetzt zueinander angeordnet. Die Kontaktelemente 118d, 120d sind jeweils als ein Federkontaktelement ausgebildet.

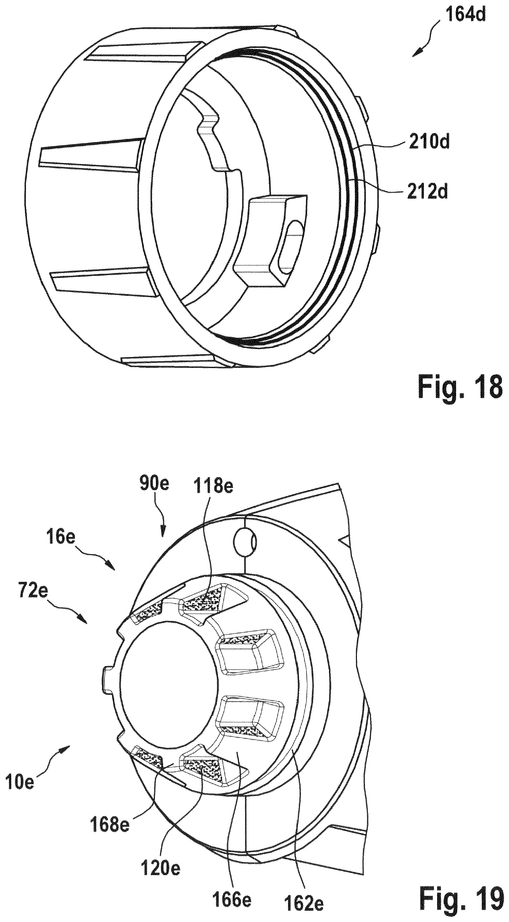

Die Aufsatzvorrichtung weist analog zu den vorhergehenden Ausführungsbeispielen einen Entriegelungsring 164d auf, der zu den Kontaktelementen 118d, 120d korrespondierende Kontaktelemente 210d, 212d aufweist (vgl. Figur 18). Die Kontaktelemente 210d, 212d weisen jeweils eine ringförmige Kontaktfläche auf. Die Kontaktelemente 210d, 212d sind entsprechend den Kontaktelementen 118d, 120d der elektrischen Schnittstelle 90d axial versetzt zueinander angeordnet. Die Kontaktelemente 210d, 212d des Entriegelungsrings 164d kommen bei der Koppelbewegung mit Kontaktflächen der Kontaktelemente 118d, 120d der elektrischen Schnittstelle 90d in Kontakt. In einer alternativen Ausgestaltung ist es denkbar, dass die Verriegelungseinheit 74d an dem Sockelabschnitt 204d ein Gewinde aufweist, in das die Kontaktelemente integriert sind. In einer solchen Ausgestaltung weist der Entriegelungsring ein korrespondierend ausgebildetes Gewinde auf, in das Kontaktelemente der Aufsatzvorrichtung integriert sind.

Figur 19 zeigt ein Werkzeugbasismodul 10e eines weiteren Ausführungsbeispiels. Das Werkzeugbasismodul 10e ist zu einer insbesondere eigenständigen Nutzung vorgesehen. Das Werkzeugbasismodul 10e weist eine nicht näher dargestellte Energienutzungseinheit auf, sowie einen Hauptausgang und eine Koppelvorrichtung, die eine mechanische Schnittstelle 16e zu einer antriebstechnischen mechanischen Anbindung zumindest einer Aufsatzvorrichtung 18e an dem Hauptausgang aufweist. Zu einer verbesserten Übersicht ist in Figur 19 eine Abtriebswelle des Hauptausgangs weggelassen. Die Koppelvorrichtung umfasst eine elektrische Schnittstelle 90e zu einer Übertragung einer großen Leistung und/oder eines großen Stroms, die zu einer mit der mechanischen Anbindung gekoppelten elektrischen Anbindung der zumindest einen Aufsatzvorrichtung 18e an dem Hauptausgang vorgesehen ist. Die elektrische Schnittstelle 90e ist als eine Leistungsschnittstelle ausgebildet. Das Werkzeugbasismodul 10e weist in dem vorliegenden Ausführungsbeispiel keine weitere elektrische Schnittstelle auf. Es ist auch denkbar, dass die elektrische Schnittstelle als eine Schnittstelle zu einer Übertragung von einer kleinen Leistung und/oder von einem kleinen Strom vorgesehen ist.

Analog zu den vorhergehenden Ausführungsbeispielen weist das Werkzeugbasismodul 10e eine Verriegelungseinheit 72e zu einer Verriegelung der Aufsatzvorrichtung 18e auf. Die Verriegelungseinheit 72e ist an dem Hauptausgang angeordnet. Die Verriegelungseinheit 72e weist ein axiales Sicherungselement 162e auf. Die Verriegelungseinheit 72e weist ein weiteres Sicherungselement 166e auf, das zu einer Drehsicherung vorgesehen ist. Das weitere Sicherungselement 166e ist in dem vorliegenden Ausführungsbeispiel einstückig mit dem Gehäuse des Werkzeugbasismoduls 10e ausgebildet. Das weitere Sicherungselement 166e ist als ein Zahnkranz ausgebildet und weist acht Zähne 168e auf, die in Umfangsrichtung gleichmäßig verteilt angeordnet sind. Der Übersichtlichkeit halber ist nur einer der Zähne 168e mit einem Bezugszeichen versehen.

Die als Leistungsschnittstelle ausgebildete elektrische Schnittstelle 90e ist in die Verriegelungseinheit 72e integriert. Die elektrische Schnittstelle 90e weist sechzehn Kontaktelemente 118e, 120e auf, die jeweils eine Kontaktfläche aufweisen. Zu einer besseren Übersicht sind nur zwei der Kontaktelemente 118e, 120e mit einem Bezugszeichen versehen. Es ist auch denkbar, dass die elektrische Schnittstelle 90e acht Kontaktelemente 118e, 120e aufweist, die jeweils zwei Kontaktflächen aufweisen. Die Kontaktflächen sind jeweils an in Umfangsrichtung ausgerichteten Flächen der Zähne 168e des Sicherungselements 166e angeordnet. Die Kontaktflächen sind in Richtung von zwischen den Zähnen 168e angeordneten Zwischenräumen ausgerichtet. In einem Winkelabschnitt von 180 Grad, bezogen auf eine Hauptabtriebsachse des Hauptausgangs, sind Kontaktflächen angeordnet, die in zumindest einem Betriebszustand eine gleiche erste Polung aufweisen. In einem zum dem Winkelabschnitt komplementären Winkelabschnitt sind Kontaktflächen angeordnet, die in zumindest einem Betriebszustand eine gleiche von der ersten Polung verschiedene Polung aufweisen. Es sind auch andere Verteilungen der Polungen denkbar, beispielsweise können für eine unterschiedliche Polung vorgesehene Kontaktflächen in Umfangsrichtung alternierend angeordnet sein.

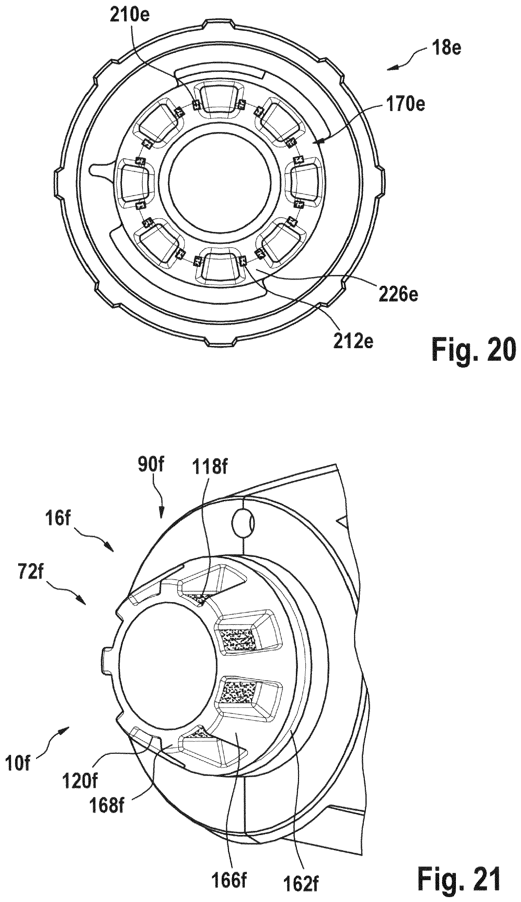

Die Aufsatzvorrichtung 18e weist eine korrespondierend zu dem weiteren Sicherungselement 166e ausgebildete Aufnahme 170e auf, die acht Gegenzähne 226e aufweist (vgl. Figur 20). In einem gekoppelten Zustand greift das weitere Sicherungselement 166e in die Aufnahme 170e der Aufsatzvorrichtung 18e ein. Die Aufsatzvorrichtung 18e weist in dem vorliegenden Ausführungsbeispiel sechzehn korrespondierend zu den Kontaktelementen 118e, 120e ausgebildete Kontaktelemente 210e, 212e auf, die an in Umfangsrichtung ausgerichteten Flächen der Gegenzähne 226e angeordnet sind. In einem gekoppelten Zustand ist jeweils ein Kontaktelement 118e, 120e der elektrischen Schnittstelle 90e mit jeweils einem Kontaktelement 210e, 212e der Aufsatzvorrichtung 18e in Kontakt. Es ist denkbar, dass die Aufsatzvorrichtung 18e in einer alternativen Ausgestaltung eine kleinere Zahl von Kontaktelementen aufweist, beispielsweise vier Kontaktelemente. In einer solchen Ausgestaltung ermöglicht die elektrische Schnittstelle eine Anbindung der Aufsatzvorrichtung 18e in einer Mehrzahl von Winkelpositionen.

Figur 21 zeigt ein Werkzeugbasismodul 10f eines weiteren Ausführungsbeispiels. Das Werkzeugbasismodul 10f ist zu einer insbesondere eigenständigen Nutzung vorgesehen. Das Werkzeugbasismodul 10f weist eine nicht näher dargestellte Energienutzungseinheit auf, sowie einen Hauptausgang und eine Koppelvorrichtung, die eine mechanische Schnittstelle 16f zu einer antriebstechnischen mechanischen Anbindung zumindest einer Aufsatzvorrichtung 18f an dem Hauptausgang aufweist. Zu einer verbesserten Übersicht ist in Figur 21 eine Abtriebswelle des Hauptausgangs weggelassen. Die Koppelvorrichtung umfasst eine elektrische Schnittstelle 90f zu einer Übertragung einer großen Leistung und/oder eines großen Stroms, die zu einer mit der mechanischen Anbindung gekoppelten elektrischen Anbindung der zumindest einen Aufsatzvorrichtung 18f an dem Hauptausgang vorgesehen ist. Die elektrische Schnittstelle 90f ist als eine Leistungsschnittstelle ausgebildet. Das Werkzeugbasismodul 10f weist in dem vorliegenden Ausführungsbeispiel keine weitere elektrische Schnittstelle auf. Es ist auch denkbar, dass die elektrische Schnittstelle 90f als eine Schnittstelle zu einer Übertragung von einer kleinen Leistung und/oder von einem kleinen Strom vorgesehen ist.

Analog zu den vorhergehenden Ausführungsbeispielen weist das Werkzeugbasismodul 10f eine Verriegelungseinheit 72f zu einer Verriegelung der Aufsatzvorrichtung 18f auf. Die Verriegelungseinheit 72f ist an dem Hauptausgang angeordnet. Die Verriegelungseinheit 72f weist ein axiales Sicherungselement 162f auf. Die Verriegelungseinheit 72f weist ein weiteres Sicherungselement 166f auf, das zu einer Drehsicherung vorgesehen ist. Das Sicherungselement 166f ist in dem vorliegenden Ausführungsbeispiel einstückig mit dem Gehäuse des Werkzeugbasismoduls 10f ausgebildet. Das weitere Sicherungselement 166f ist als ein Zahnkranz ausgebildet und weist acht Zähne 168f auf, die in Umfangsrichtung gleichmäßig verteilt angeordnet sind.

Die als Leistungsschnittstelle ausgebildete elektrische Schnittstelle 90f ist in die Verriegelungseinheit 72f integriert. Die elektrische Schnittstelle 90f weist acht Kontaktelemente 118f, 120f auf, die jeweils eine Kontaktfläche aufweisen. Die Kontaktflächen sind jeweils an radial nach außen ausgerichteten Flächen in Zwischenräumen zwischen den Zähnen 168f des Sicherungselements 166f angeordnet. In einem Winkelabschnitt von 180 Grad, bezogen auf eine Hauptabtriebsachse des Hauptausgangs, sind Kontaktflächen angeordnet, die in zumindest einem Betriebszustand eine gleiche erste Polung aufweisen. In einem zu dem Winkelabschnitt komplementären Winkelabschnitt sind Kontaktflächen angeordnet, die in zumindest einem Betriebszustand eine gleiche von der ersten Polung verschiedene Polung aufweisen. Es sind auch andere Verteilungen der Polungen denkbar, beispielsweise können für unterschiedliche Polungen vorgesehene Kontaktflächen in Umfangsrichtung alternierend angeordnet sein.

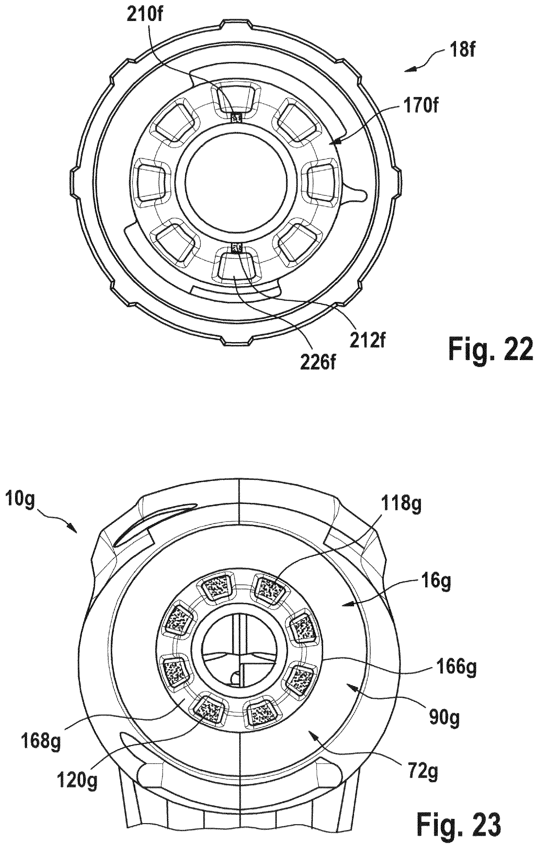

Die Aufsatzvorrichtung 18f weist eine korrespondierend zu dem weiteren Sicherungselement 166f ausgebildete Aufnahme 170f auf, die acht Gegenzähne 226f aufweist (vgl. Figur 22). In einem gekoppelten Zustand greift das weitere Sicherungselement 166f in die Aufnahme 170f der Aufsatzvorrichtung 18f ein. Die Aufsatzvorrichtung 18f weist in dem vorliegenden Ausführungsbeispiel zwei korrespondierend zu den Kontaktelementen 118f, 120f ausgebildete Kontaktelemente 210f, 212f auf, die an radial nach innen gerichteten Flächen der Gegenzähne 226f angeordnet sind. Die Kontaktelemente 210f, 212f sind als Federkontaktelemente ausgebildet. In einem gekoppelten Zustand sind die Kontaktelemente 210f, 212f der Aufsatzvorrichtung 18f jeweils mit einem Kontaktelement 118f, 120f der elektrischen Schnittstelle 90f in Kontakt. Die Schnittstelle 90f ist zu einer Anbindung der Aufsatzvorrichtung 18f in einer von vier verschiedenen Winkelpositionen vorgesehen. Es ist denkbar, dass die Aufsatzvorrichtung 18f in einer alternativen Ausgestaltung eine von vier abweichende Zahl von Kontaktelementen aufweist.

Figur 23 zeigt ein Werkzeugbasismodul 10g eines weiteren Ausführungsbeispiels. Das Werkzeugbasismodul 10g ist zu einer insbesondere eigenständigen Nutzung vorgesehen. Das Werkzeugbasismodul 10g weist eine nicht näher dargestellte Energienutzungseinheit auf, sowie einen Hauptausgang und eine Koppelvorrichtung, die eine mechanische Schnittstelle 16g zu einer antriebstechnischen mechanischen Anbindung zumindest einer Aufsatzvorrichtung 18g an dem Hauptausgang aufweist. Zu einer verbesserten Übersicht ist in Figur 23 eine Abtriebswelle des Hauptausgangs weggelassen. Die Koppelvorrichtung umfasst eine elektrische Schnittstelle 90g zu einer Übertragung einer großen Leistung und/oder eines großen Stroms, die zu einer mit der mechanischen Anbindung gekoppelten elektrischen Anbindung der zumindest einen Aufsatzvorrichtung 18g an dem Hauptausgang vorgesehen ist. Die elektrische Schnittstelle 90g ist als eine Leistungsschnittstelle ausgebildet. Das Werkzeugbasismodul 10g weist in dem vorliegenden Ausführungsbeispiel keine weitere elektrische Schnittstelle auf. Es ist auch denkbar, dass die elektrische Schnittstelle als eine Schnittstelle zu einer Übertragung von einer kleinen Leistung und/oder von einem kleinen Strom vorgesehen ist.

Analog zu den vorhergehenden Ausführungsbeispielen weist das Werkzeugbasismodul 10g eine Verriegelungseinheit 72g zu einer Verriegelung der Aufsatzvorrichtung 18g auf. Die Verriegelungseinheit 72g ist an dem Hauptausgang angeordnet. Die Verriegelungseinheit 72g weist ein Sicherungselement 166g auf, das zu einer Drehsicherung vorgesehen ist. Das Sicherungselement 166g ist in dem vorliegenden Ausführungsbeispiel einstückig mit dem Gehäuse des Werkzeugbasismoduls 10g ausgebildet. Das Sicherungselement 166g ist als ein Zahnkranz ausgebildet und weist acht Zähne 168g auf, die in Umfangsrichtung gleichmäßig verteilt angeordnet sind.

Die als Leistungsschnittstelle ausgebildete elektrische Schnittstelle 90g ist in die Verriegelungseinheit 72g integriert. Die elektrische Schnittstelle 90g weist acht Kontaktelemente 118g, 120g auf, die jeweils eine Kontaktfläche aufweisen. Die Kontaktflächen sind jeweils an axial in eine Hauptarbeitsrichtung des Werkzeugbasismoduls 10g ausgerichteten Flächen in Zwischenräumen zwischen den Zähnen 168g des Sicherungselements 166g angeordnet. In einem Winkelabschnitt von 180 Grad bezogen auf eine Hauptabtriebsachse des Hauptausgangs sind Kontaktflächen angeordnet, die in zumindest einem Betriebszustand eine gleiche erste Polung aufweisen. In einem zu dem Winkelabschnitt komplementären Winkelabschnitt sind Kontaktflächen angeordnet, die in zumindest einem Betriebszustand eine gleiche von der ersten Polung verschiedene Polung aufweisen. Es sind auch andere Verteilungen der Polungen denkbar, beispielsweise können für unterschiedliche Polungen vorgesehene Kontaktflächen in Umfangsrichtung alternierend angeordnet sein.

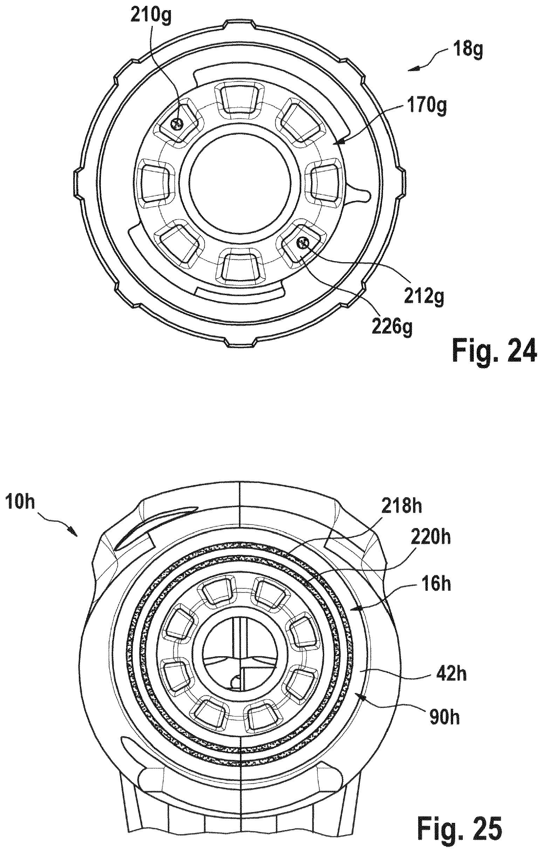

Die Aufsatzvorrichtung 18g weist eine korrespondierend zu dem weiteren Sicherungselement 166g ausgebildete Aufnahme 170g auf, die acht Gegenzähne 226g aufweist (vgl. Figur 24). In einem gekoppelten Zustand greift das weitere Sicherungselement 166g in die Aufnahme 170g der Aufsatzvorrichtung 18g ein. Die Aufsatzvorrichtung 18g weist in dem vorliegenden Ausführungsbeispiel zwei korrespondierend zu den Kontaktelementen 118g, 120g ausgebildete Kontaktelemente 210g, 212g auf, die an axial gerichteten Stirnflächen der Gegenzähne 226g angeordnet sind. Die Kontaktelemente 210g, 212g weisen jeweils einen federbelastet gelagerten Stift auf. In einem gekoppelten Zustand sind die Kontaktelemente 210g, 212g der Aufsatzvorrichtung 18g jeweils mit einem Kontaktelement 118g, 120g der elektrischen Schnittstelle 90g in Kontakt. Die Schnittstelle 90g ist zu einer Anbindung der Aufsatzvorrichtung 18g in einer von vier verschiedenen Winkelpositionen vorgesehen. Es ist denkbar, dass die Aufsatzvorrichtung 18g in einer alternativen Ausgestaltung eine von vier abweichende Zahl von Kontaktelementen aufweist. Es ist ferner denkbar, dass das Werkzeugbasismodul 10g in einer alternativen Ausgestaltung eine weitere elektrische Schnittstelle aufweist. In einer solchen Ausgestaltung sind die Kontaktelemente jeweils einer der Schnittstellen zugeordnet.

Figur 25 zeigt ein Werkzeugbasismodul 10h eines weiteren Ausführungsbeispiels. Das Werkzeugbasismodul 10h ist zu einer insbesondere eigenständigen Nutzung vorgesehen. Das Werkzeugbasismodul 10h weist eine nicht näher dargestellte Energienutzungseinheit auf, sowie einen Hauptausgang und eine Koppelvorrichtung, die eine mechanische Schnittstelle 16h zu einer antriebstechnischen mechanischen Anbindung zumindest einer Aufsatzvorrichtung 18h an dem Hauptausgang aufweist. Zu einer verbesserten Übersicht ist in Figur 25 eine Abtriebswelle des Hauptausgangs weggelassen. Die Koppelvorrichtung umfasst eine elektrische Schnittstelle 90h zu einer Übertragung einer großen Leistung und/oder eines großen Stroms, die zu einer mit der mechanischen Anbindung gekoppelten elektrischen Anbindung der zumindest einen Aufsatzvorrichtung 18h an dem Hauptausgang vorgesehen ist. Die elektrische Schnittstelle 90h ist als eine Leistungsschnittstelle ausgebildet. Das Werkzeugbasismodul 10h weist in dem vorliegenden Ausführungsbeispiel keine weitere elektrische Schnittstelle auf. Es ist auch denkbar, dass die elektrische Schnittstelle als eine Schnittstelle zu einer Übertragung von einer kleinen Leistung und/oder von einem kleinen Strom vorgesehen ist.

Die elektrische Schnittstelle 90h weist eine Koppelrichtung auf. Der Hauptausgang weist eine Hauptabtriebsachse auf. Die elektrische Schnittstelle 90h weist zumindest eine Kontaktfläche 218h, 220h auf, die zumindest im Wesentlichen in einer Kontaktebene angeordnet ist, die zumindest im Wesentlichen senkrecht zu der Koppelrichtung angeordnet ist. Die Kontaktfläche 218h, 220h ist zumindest im Wesentlichen eben ausgebildet. Die elektrische Schnittstelle 90h des Werkzeugbasismoduls 10h weist eine Mehrzahl von Kontaktflächen 218h, 220h auf. In dem vorliegenden Ausführungsbeispiel weist die elektrische Schnittstelle 90h des Werkzeugbasismoduls 10h zwei Kontaktflächen 218h, 220h auf. Die Kontaktflächen 218h, 220h der elektrischen Schnittstelle 90h sind sämtlich zumindest im Wesentlichen eben ausgebildet und in der Kontaktebene angeordnet. Die Kontaktflächen 218h, 220h sind im Unterschied zu den vorhergehenden Ausführungsbeispielen ringförmig ausgebildet. Die Kontaktflächen 218h, 220h weisen in zumindest einem Betriebszustand eine unterschiedliche Polung auf. Die Kontaktflächen 218h, 220h sind konzentrisch zueinander angeordnet. Die Kontaktflächen 218h, 220h sind konzentrisch um eine Hauptabtriebsachse des Hauptausgangs angeordnet. Die Kontaktflächen 218h, 220h weisen unterschiedliche Durchmesser auf.

Die Koppelvorrichtung weist zumindest ein zumindest teilweise scheibenförmiges Trägerelement 42h mit einer Stirnfläche auf, an der die zumindest eine Kontaktfläche 218h, 220h angeordnet ist. An der Stirnfläche sind sämtliche Kontaktflächen 218h, 220h der elektrischen Schnittstelle 90h angeordnet. Das Trägerelement 42h ist in einem montierten Zustand unbeweglich fest mit dem Gehäuse des Werkzeugbasismoduls 10h verbunden. Das Trägerelement 42h ist kreisringförmig ausgebildet. Es weist eine Scheibenebene auf, welche die Richtung einer Kontaktebene der elektrischen Schnittstelle 90h festlegt. Die Stirnfläche des Trägerelements 42h, an der die Kontaktflächen 218h, 220h der elektrische Schnittstelle 90h angeordnet sind, weist die Anlagefläche der Koppelvorrichtung für die Aufsatzvorrichtung 18h auf.

Die Aufsatzvorrichtung 18h weist einen Entriegelungsring 164h auf, der zu den Kontaktflächen 218h, 220h korrespondierende Kontaktelemente 210h, 212h aufweist. Die Kontaktelemente 210h, 212h weisen jeweils ringförmig ausgebildete Kontaktflächen 222h, 224h auf. Die Kontaktelemente 210h, 212h sind elastisch ausgebildet und weisen in axialer Richtung eine Wellenstruktur auf. Die Kontaktelemente 210h, 212h sind entsprechend den Kontaktflächen 218h, 220h der elektrischen Schnittstelle 90h konzentrisch zueinander angeordnet. Die Kontaktelemente 210h, 212h des Entriegelungsrings 164h kommen bei der Koppelbewegung mit Kontaktflächen 218h, 220h der elektrischen Schnittstelle 90h in Kontakt. Es ist denkbar, dass die elektrische Schnittstelle 90h zumindest im Wesentlichen rechteckig ausgebildete Kontaktflächen aufweist, die in einem unterschiedlichen Abstand von der Hauptabtriebsachse des Hauptausgangs angeordnet sind. Es ist weiterhin denkbar, dass in einer alternativen Ausgestaltung das Trägerelement 42h ringförmige Vertiefungen aufweist, in denen die Kontaktflächen der elektrischen Schnittstelle angeordnet sind. In einer solchen Ausgestaltung weist der Entriegelungsring stift- oder zungenförmige Kontaktelemente auf, die in zumindest einem angebundenen Zustand in die ringförmigen Vertiefungen des Trägerelements eingreifen.

## Patentansprüche

1. Werkzeugbasismodul, insbesondere zu einer eigenständigen Nutzung, mit einer Antriebseinheit (12a), mit einer Getriebeeinheit (144a) zur Anpassung einer Drehzahl der Antriebseinheit (12a), mit einem Hauptausgang (14a; 14b) und mit einer Koppelvorrichtung, die eine mechanische Schnittstelle (16a; 16b; 16c; 16d; 16e; 16f; 16g; 16h) zu einer antriebstechnischen mechanischen Anbindung zumindest einer Aufsatzvorrichtung (18a, 20a, 22a; 18e; 18f; 18g; 18h) an dem Hauptausgang (14a; 14b) aufweist, **dadurch gekennzeichnet, dass** die Koppelvorrichtung eine elektrische Schnittstelle (90a; 90b; 90c; 90d; 90e; 90f; 90g; 90h) zu einer Übertragung einer großen Leistung und/oder eines großen Stroms aufweist, die zu einer mit der mechanischen Anbindung gekoppelten elektrischen Anbindung der zumindest einen Aufsatzvorrichtung (18a, 20a, 22a; 18e; 18f; 18g; 18h) an dem Hauptausgang (14a; 14b) vorgesehen ist.

2. Werkzeugbasismodul nach Anspruch 1, **dadurch gekennzeichnet, dass** die elektrische Schnittstelle (90a; 90b; 90c; 90d; 90e; 90f; 90g; 90h) zu einer Übertragung eines Stroms von wenigstens 2 A vorgesehen ist.

3. Werkzeugbasismodul nach Anspruch 1 oder 2, **dadurch gekennzeichnet, dass** die elektrische Schnittstelle (90a; 90b; 90c; 90d; 90e; 90f; 90g; 90h) in einem gekoppelten Zustand einen elektrischen Widerstand von höchstens 15 mΩ aufweist.

4. Werkzeugbasismodul nach einem der vorhergehenden Ansprüche, **dadurch gekennzeichnet, dass** die elektrische Schnittstelle (90a; 90b; 90c; 90d; 90e; 90f; 90g; 90h) zumindest zwei Steckelemente (92a; 94a; 92b, 94b, 96b, 98b, 100b, 102b) und zumindest ein Isolatorelement (104a; 104b, 106b, 108b) aufweist, das zumindest in einem angebundenen Zustand räumlich zwischen den Steckelementen (92a; 94a; 92b, 94b, 96b, 98b, 100b, 102b) angeordnet ist.

5. Werkzeugbasismodul nach einem der vorhergehenden Ansprüche, **dadurch gekennzeichnet, dass** die elektrische Schnittstelle (90b) zumindest zwei artgleiche Kontaktschnittstellen (112b, 114b, 116b) aufweist.

6. Werkzeugbasismodul nach einem der vorhergehenden Ansprüche, **dadurch gekennzeichnet, dass** die Koppelvorrichtung zumindest eine weitere elektrische Schnittstelle (24a; 24b; 24c) zu einer Übertragung eines kleinen Stroms und/oder einer kleinen Leistung aufweist, die dazu vorgesehen ist, in einem gekoppelten Zustand zumindest einen von der elektrischen Schnittstelle (90a; 90b; 90c; 90d; 90e; 90f; 90g; 90h) unabhängigen Stromkreis zu schließen.

7. Werkzeugbasismodul nach Anspruch 6, **gekennzeichnet durch** zumindest eine Steuer- und/oder Regeleinheit (26a), die zu einer Auswertung zumindest eines, insbesondere mittels der weiteren elektrischen Schnittstelle (24a; 24b; 24c) übermittelten, Werts einer Kenngröße der zumindest einen Aufsatzvorrichtung (18a, 20a, 22a; 18e; 18f; 18g; 18h) vorgesehen ist.

8. Werkzeugbasismodul nach Anspruch 7, **dadurch gekennzeichnet, dass** die Kenngröße als ein Kodierwiderstand ausgebildet ist.

9. Werkzeugbasismodul zumindest nach Anspruch 7, **dadurch gekennzeichnet, dass** die Steuer- und/oder Regeleinheit (26a) in zumindest einem Betriebszustand eine Stromversorgung der Antriebseinheit (12a), eine Stromversorgung der elektrischen Schnittstelle (90a; 90b; 90c; 90d; 90e; 90f; 90g; 90h) und/oder eine Stromversorgung der weiteren elektrischen Schnittstelle (24a; 24b; 24c) in Abhängigkeit von dem Wert der Kenngröße steuert und/oder regelt.

10. Werkzeugbasismodul nach einem der vorhergehenden Ansprüche, **dadurch gekennzeichnet, dass** die elektrische Schnittstelle (90a; 90b; 90c; 90d; 90e; 90f; 90g; 90h) zumindest ein Kontaktelement (118a, 120a, 122a, 124a) aufweist, das zu einer Reinigungsbewegung einer Kontaktfläche, insbesondere zu einer Schleifbewegung, vorgesehen ist.

11. Werkzeugbasismodul nach einem der vorhergehenden Ansprüche, **dadurch gekennzeichnet, dass** die elektrische Schnittstelle (90a; 90b; 90c; 90d; 90e; 90f; 90g; 90h) zumindest ein Kontaktelement (118a, 120a, 122a, 124a) aufweist, das in einem angebundenen Zustand eine Kontaktfläche mit einer Presskraft von wenigstens 4 N beaufschlagt.

12. Aufsatzvorrichtung, insbesondere zu einer Nutzung mit einem Werkzeugbasismodul (10a; 10b; 10c; 10d; 10e; 10f; 10g; 10h), mit einem Arbeitsausgang (354a), mit einem Haupteingang (314a) und mit einer Koppelvorrichtung, die eine mechanische Schnittstelle (316a) zu einer antriebstechnischen mechanischen Anbindung des Haupteingangs (314a) der Aufsatzvorrichtung (18a, 20a, 22a; 18e; 18f; 18g; 18h) an einem Hauptausgang (14a; 14b) eines Werkzeugbasismoduls (10a; 10b; 10c; 10d; 10e; 10f; 10g; 10h) aufweist, **dadurch gekennzeichnet, dass** die Koppelvorrichtung eine elektrische Schnittstelle (390a) zu einer Übertragung einer großen Leistungen und/oder eines großen Stroms aufweist, die zu einer mit der mechanischen Anbindung gekoppelten elektrischen Anbindung der Aufsatzvorrichtung (18a, 20a, 22a; 18e; 18f; 18g; 18h) an dem Hauptausgang (14a; 14b) eines Werkzeugbasismoduls (10a; 10b; 10c; 10d; 10e; 10f; 10g; 10h) vorgesehen ist.

13. Handwerkzeugmaschinensystem mit einem, insbesondere eigenständig nutzbaren, Werkzeugbasismodul (10a; 10b; 10c; 10d; 10e; 10f; 10g; 10h) nach einem der Ansprüche1 bis 11 und mit zumindest einer Aufsatzvorrichtung (18a, 20a, 22a; 18e; 18f; 18g; 18h) nach Anspruch 12, die zu einer antriebstechnischen mechanischen und/oder einer elektrischen Anbindung an das Werkzeugbasismodul (10a; 10b; 10c; 10d; 10e; 10f; 10g; 10h) vorgesehen ist.

14. Handwerkzeugmaschinensystem nach Anspruch 13, **dadurch gekennzeichnet, dass** die zumindest eine Aufsatzvorrichtung (20a, 22a) zu einer elektrischen Anbindung mittels der elektrischen Schnittstelle (90a; 90c) und einer weiteren elektrischen Schnittstelle (24a; 24c) vorgesehen ist.

15. Handwerkzeugmaschinensystem zumindest nach Anspruch 14, **dadurch gekennzeichnet, dass** die Aufsatzvorrichtung (20a, 22a) zumindest eine elektrische Energienutzungseinheit (126a, 128a) aufweist mit einer maximalen Leistungsaufnahme, die wenigstens 50 Prozent einer maximalen Leistungsaufnahme der Antriebseinheit (12a) des Werkzeugbasismoduls (10a) entspricht.

16. Aufsatzvorrichtung eines Handwerkzeugmaschinensystems nach einem der Ansprüche 13 bis 15.

17. Verfahren zu einer Anbindung einer Aufsatzvorrichtung (18a, 20a, 22a; 18e; 18f; 18g; 18h) an ein Werkzeugbasismodul (10a; 10b; 10c; 10d; 10e; 10f; 10g; 10h) nach einem der Ansprüche 1 bis 11, das eine Antriebseinheit (12a), einen Hauptausgang (14a; 14b) und eine Koppelvorrichtung umfasst, die eine mechanische Schnittstelle (16a; 16b; 16c; 16d; 16e; 16f; 16g; 16h) zu einer antriebstechnischen mechanischen Anbindung der Aufsatzvorrichtung an dem Hauptausgang (14a; 14b) aufweist, **dadurch gekennzeichnet, dass** eine elektrische Schnittstelle (90a; 90b; 90c; 90d; 90e; 90f; 90g; 90h) der Koppelvorrichtung eine elektrische Anbindung der Aufsatzvorrichtung (18a, 20a, 22a; 18e; 18f; 18g; 18h) mit der mechanischen Anbindung koppelt.

## Claims

1. Tool basic module, in particular for independent use, with a drive unit (12a), with a transmission unit (144a) for adjusting a rotational speed of the drive unit (12a), with a main output (14a; 14b) and with a coupling device which has a mechanical interface (16a; 16b; 16c; 16d; 16e; 16f; 16g; 16h) for a mechanical drive connection of at least one attachment device (18a, 20a, 22a; 18e; 18f; 18g; 18h) to the main output (14a; 14b), **characterized in that** the coupling device has an electrical interface (90a; 90b; 90c; 90d; 90e; 90f; 90g; 90h) for transmitting a high power and/or a high current, and which is provided for an electrical connection, coupled to the mechanical connection, of the at least one attachment device (18a, 20a, 22a; 18e; 18f; 18g; 18h) to the main output (14a; 14b).

2. Tool basic module according to Claim 1, **characterized in that** the electrical interface (90a; 90b; 90c; 90d; 90e; 90f; 90g; 90h) is provided for transmitting a current of at least 2 A.

3. Tool basic module according to Claim 1 or 2, **characterized in that,** in a coupled state, the electrical interface (90a; 90b; 90c; 90d; 90e; 90f; 90g; 90h) has an electrical resistance of at most 15 mΩ.

4. Tool basic module according to one of the preceding claims, **characterized in that** the electrical interface (90a; 90b; 90c; 90d; 90e; 90f; 90g; 90h) has at least two plug-in elements (92a; 94a; 92b, 94b, 96b, 98b, 100b, 102b) and at least one insulating element (104a; 104b, 106b, 108b) which, at least in a connected state, is arranged spatially between the plug-in elements (92a; 94a; 92b, 94b, 96b, 98b, 100b, 102b).

5. Tool basic module according to one of the preceding claims, **characterized in that** the electrical interface (90b) has at least two contact interfaces (112b, 114b, 116b) of the same type.

6. Tool basic module according to one of the preceding claims, **characterized in that** the coupling device has at least one further electrical interface (24a; 24b; 24c) for transmitting a low current and/or a low power, which is provided, in a coupled state, to close at least one current circuit which is independent of the electrical interface (90a; 90b; 90c; 90d; 90e; 90f; 90g; 90h).

7. Tool basic module according to Claim 6, **characterized by** at least one control and/or regulating unit (26a) which is provided for evaluating at least one value, which is transmitted in particular by means of the further electrical interface (24a; 24b; 24c), of a characteristic variable of the at least one attachment device (18a, 20a, 22a; 18e; 18f; 18g; 18h).

8. Tool basic module according to Claim 7, **characterized in that** the characteristic variable is in the form of a coding resistance.

9. Tool basic module at least according to Claim 7, **characterized in that,** in at least one operating state, the control and/or regulating unit (26a) controls and/or regulates a current supply of the drive unit (12a), a current supply of the electrical interface (90a; 90b; 90c; 90d; 90e; 90f; 90g; 90h) and/or a current supply of the further electrical interface (24a; 24b; 24c) depending on the value of the characteristic variable.

10. Tool basic module according to one of the preceding claims, **characterized in that** the electrical interface (90a; 90b; 90c; 90d; 90e; 90f; 90g; 90h) has at least one contact element (118a, 120a, 122a, 124a) which is provided for a cleaning movement of a contact surface, in particular for an abrading movement.

11. Tool basic module according to one of the preceding claims, **characterized in that** the electrical interface (90a; 90b; 90c; 90d; 90e; 90f; 90g; 90h) has at least one contact element (118a, 120a, 122a, 124a) which, in a connected state, acts upon a contact surface with a pressing force of at least 4 N.

12. Attachment device, in particular for use with a tool basic module (10a; 10b; 10c; 10d; 10e; 10f; 10g; 10h), with a working output (354a), with a main input (314a) and with a coupling device which has a mechanical interface (316a) for a mechanical drive connection of the main input (314a) of the attachment device (18a, 20a, 22a; 18e; 18f; 18g; 18h) to a main output (14a; 14b) of a tool basic module (10a; 10b; 10c; 10d; 10e; 10f; 10g; 10h), **characterized in that** the coupling device has an electrical interface (390a) for transmitting a high power and/or a high current, and which is provided for an electrical connection, coupled to the mechanical connection, of the attachment device (18a, 20a, 22a; 18e; 18f; 18g; 18h) to the main output (14a; 14b) of a tool basic module (10a; 10b; 10c; 10d; 10e; 10f; 10g; 10h).

13. Portable power tool system with an, in particular independently usable, tool basic module (10a; 10b; 10c; 10d; 10e; 10f; 10g; 10h) according to one of Claims 1 to 11, and with at least one attachment device (18a, 20a, 22a; 18e; 18f; 18g; 18h) according to Claim 12, which is provided for a mechanical and/or an electrical drive connection to the tool basic module (10a; 10b; 10c; 10d; 10e; 10f; 10g; 10h).

14. Portable power tool system according to Claim 13, **characterized in that** the at least one attachment device (20a, 22a) is provided for an electrical connection by means of the electrical interface (90a; 90c) and a further electrical interface (24a; 24c) .

15. Portable power tool system at least according to Claim 14, **characterized in that** the attachment device (20a, 22a) has at least one electrical energy use unit (126a, 128a) with a maximum power consumption which corresponds to at least 50% of a maximum power consumption of the drive unit (12a) of the tool basic module (10a).

16. Attachment device of a portable power tool system according to one of Claims 13 to 15.

17. Method for connecting an attachment device (18a, 20a, 22a; 18e; 18f; 18g; 18h) to a tool basic module (10a; 10b; 10c; 10d; 10e; 10f; 10g; 10h) according to one of Claims 1 to 11, which comprises a drive unit (12a), a main output (14a; 14b) and a coupling device which has a mechanical interface (16a; 16b; 16c; 16d; 16e; 16f; 16g; 16h) for a mechanical drive connection of the attachment device to the main output (14a; 14b), **characterized in that** an electrical interface (90a; 90b; 90c; 90d; 90e; 90f; 90g; 90h) of the coupling device couples an electrical connection of the attachment device (18a, 20a, 22a; 18e; 18f; 18g; 18h) to the mechanical connection.

## Revendications

1. Module de base d'outil, destiné notamment à une utilisation autonome, comprenant comportant une unité d'entraînement (12a), une unité de transmission (144a) destinée à adapter une vitesse de rotation de l'unité d'entraînement (12a), une sortie principale (14a ; 14b) et un dispositif de couplage qui comporte une interface mécanique (16a ; 16b ; 16c ; 16d ; 16e ; 16f ; 16g ; 16h) permettant une fixation mécanique conformément aux techniques d'entraînement d'au moins un dispositif rapporté (18a, 20a, 22a ; 18e ; 18f ; 18g ; 18h) à la sortie principale (14a ; 14b),
**caractérisé en ce que** le dispositif de couplage comporte une interface électrique (90a ; 90b ; 90c ; 90d ; 90e ; 90f ; 90g ; 90h) destinée à transmettre une puissance élevée et/ou une intensité élevée, qui est prévue pour permettre un couplage électrique, complétant le couplage mécanique, dudit au moins un dispositif rapporté (18a, 20a, 22a ; 18e ; 18f ; 18g ; 18h) à la sortie principale (14a ; 14b).

2. Module de base d'outil selon la revendication 1, **caractérisé en ce que** l'interface électrique (90a ; 90b ; 90c ; 90d ; 90e ; 90f ; 90g ; 90h) est prévue pour transmettre une intensité d'au moins 2 A.

3. Module de base d'outil selon la revendication 1 ou 2, **caractérisé en ce que** l'interface électrique (90a ; 90b ; 90c ; 90d ; 90e ; 90f ; 90g ; 90h) présente une résistance électrique de 15 mΩ au maximum dans un état couplé.

4. Module de base d'outil selon l'une des revendications précédentes, **caractérisé en ce que** l'interface électrique (90a ; 90b ; 90c ; 90d ; 90e ; 90f ; 90g ; 90h) comporte au moins deux éléments enfichables (92a ; 94a ; 92b, 94b, 96b, 98b, 100b, 102b) et au moins un élément isolant (104a ; 104b, 106b, 108b) qui est disposé spatialement, au moins dans un état raccordé, entre les éléments enfichables (92a ; 94a ; 92b, 94b, 96b, 98b, 100b, 102b).

5. Module de base d'outil selon l'une des revendications précédentes, **caractérisé en ce que** l'interface électrique (90b) comporte au moins deux interfaces de contact (112b, 114b, 116b) du même type.

6. Module de base d'outil selon l'une des revendications précédentes, **caractérisé en ce que** le dispositif de couplage présente au moins une autre interface électrique (24a ; 24b ; 24c) pour transmettre un courant faible et/ou une puissance faible, qui est prévue, dans un état couplé, pour fermer au moins un circuit indépendant de l'interface électrique (90a ; 90b ; 90c ; 90d ; 90e ; 90f ; 90g ; 90h).

7. Module de base d'outil selon la revendication 6, **caractérisé par** au moins une unité de commande et/ou de régulation (26a) qui est prévue pour évaluer au moins une valeur transmise, en particulier au moyen de l'autre interface électrique (24a ; 24b ; 24c), d'une grandeur caractéristique dudit au moins un dispositif rapporté (18a, 20a, 22a ; 18e ; 18f ; 18g ; 18h).

8. Module de base d'outil selon la revendication 7, **caractérisé en ce que** la grandeur caractéristique est conçue comme étant une résistance de codage.

9. Module de base d'outil au moins selon la revendication 7, **caractérisé en ce que** l'unité de commande et/ou de régulation (26a), dans au moins un état de fonctionnement, commande et/ou régule une alimentation en courant de l'unité d'entraînement (12a), une alimentation en courant de l'interface électrique (90a ; 90b ; 90c ; 90d ; 90e ; 90f ; 90g ; 90h) et/ou une alimentation en courant de l'autre interface électrique (24a ; 24b ; 24c) en fonction de la valeur de la grandeur caractéristique.

10. Module de base d'outil selon l'une des revendications précédentes, **caractérisé en ce que** l'interface électrique (90a ; 90b ; 90c ; 90d ; 90e ; 90f ; 90g ; 90h) comporte au moins un élément de contact (118a, 120a, 122a, 124a) qui est prévu pour un mouvement de nettoyage d'une surface de contact, en particulier pour un mouvement de ponçage.

11. Module de base d'outil selon l'une des revendications précédentes, **caractérisé en ce que** l'interface électrique (90a : 90b ; 90c ; 90d ; 90e ; 90f ; 90g ; 90h) comporte au moins un élément de contact (118a, 120a, 122a, 124a) qui, dans un état raccordé, agit sur une surface de contact avec une force de pression d'au moins 4 N.

12. Dispositif rapporté, destiné notamment à être utilisé avec un module de base d'outil (10a ; 10b ; 10c ; 10d ; 10e ; 10f ; 10g ; 10h), comportant une sortie de travail (354a), une entrée principale (314a) et un dispositif de couplage qui comporte une interface mécanique (316a) permettant une fixation mécanique de l'entrée principale (314a) du dispositif rapporté (18a, 20a, 22a ; 18e ; 18f ; 18g ; 18h) à une sortie principale (14a ; 14b) d'un module de base d'outil (10a ; 10b ; 10c ; 10d ; 10e ; 10f ; 10g ; 10h),
**caractérisé en ce que** le dispositif de couplage comprend une interface électrique (390a) destinée à transmettre une puissance élevée et/ou une intensité élevée, qui est prévu pour permettre un couplage électrique, complétant le couplage mécanique, du dispositif rapporté (18a, 20a, 22a ; 18e ; 18f ; 18g ; 18h) à la sortie principale (14a ; 14b) d'un module de base d'outil (10a ; 10b ; 10c ; 10d ; 10e ; 10f ; 10g ; 10h).

13. Système de machine-outil à main comprenant un module de base d'outil (10a ; 10b ; 10c ; 10d ; 10e ; 10f ; 10g ; 10h), pouvant notamment être utilisé indépendamment, selon l'une des revendications 1 à 11, et au moins un dispositif rapporté (18a, 20a, 22a ; 18e ; 18f ; 18g ; 18h) selon la revendication 12, qui est prévu pour une fixation mécanique et/ou électrique conformément aux technique d'entraînement au module de base d'outil (10a ; 10b ; 10c ; 10d ; 10e ; 10f ; 10g ; 10h).

14. Système de machine-outil à main selon la revendication 13, **caractérisé en ce que** ledit au moins un dispositif rapporté (20a, 22a) est prévu pour une fixation électrique au moyen de l'interface électrique (90a ; 90c) et d'une autre interface électrique (24a ; 24c) .

15. Système de machine-outil à main au moins selon la revendication 14, **caractérisé en ce que** le dispositif rapporté (20a, 22a) comporte au moins une unité d'utilisation de puissance électrique (126a, 128a) présentant une consommation de puissance maximale qui correspond à au moins 50 pour cent d'une consommation de puissance maximale de l'unité d'entraînement (12a) du module de base d'outil (10a).

16. Dispositif rapporté d'un système de machine-outil à main selon l'une des revendications 13 à 15.

17. Procédé pour la fixation d'un dispositif rapporté (18a, 20a, 22a ; 18e ; 18f ; 18g ; 18h) à un module de base d'outil (10a ; 10b ; 10c ; 10d ; 10e ; 10f ; 10g ; 10h) selon l'une des revendications 1 à 11, qui comporte une unité d'entraînement (12a), une sortie principale (14a ; 14b) et un dispositif de couplage qui comporte une interface mécanique (16a ; 16b ; 16c ; 16d ; 16e ; 16f ; 16g ; 16h) permettant une fixation mécanique conforme aux techniques d'entraînement du dispositif rapporté à la sortie principale (14a ; 14b), **caractérisé en ce qu'**une interface électrique (90a ; 90b ; 90c ; 90d ; 90e ; 90f ; 90g ; 90h) du dispositif de couplage couple une fixation électrique du dispositif rapporté (18a, 20a, 22a ; 18e ; 18f ; 18g ; 18h) à la fixation mécanique.
